# EUROPEAN PATENT APPLICATION

(11) **EP 4 481 308 A1**
(43) Date of publication of application: **25.12.2024**
(21) Application number: 22925693.8
(22) Date of filing: 18.11.2022
(51) Int. Cl.: F25D 31/00

(54) **REFRIGERATION EQUIPMENT**

(30) Priority: 14.02.2022 CN 202210134043; 22.08.2022 CN 202222210760 U; 22.08.2022 CN 202211006376; 22.08.2022 CN 202211006367
(71) Applicant: Hisense Refrigerator Co., Ltd., Qingdao, Shandong 266736 (CN)
(72) Inventor: WANG, Haiyan, Qingdao, Shandong 266736 (CN); YANG, Dahai, Qingdao, Shandong 266736 (CN); TAO, Haibo, Qingdao, Shandong 266736 (CN); LI, Houmin, Qingdao, Shandong 266736 (CN); QU, Xiaolei, Qingdao, Shandong 266736 (CN); JIANG, Shuo, Qingdao, Shandong 266736 (CN); JIANG, Wenjing, Qingdao, Shandong 266736 (CN)
(74) Representative: Casalonga
(86) International application number: PCT/CN2022/133005
(87) International publication number: WO 2023/151342

(57) **Abstract**

Refrigeration equipment (1000), comprising a decanting device (300). The decanting device (300) is configured to extract wine liquid from a wine bottle (10a), and inject air into the extracted wine liquid for decantation. The decanting device (300) comprises a wine outlet mechanism (1), a first one-way valve (141), a first control valve (512), a second control valve (513), a first pump (501), a second pump (502), an air-mixing decantation cavity (40), and a wine outlet pipe (41). During wine extraction, the first pump (501) works, such that air enters the first control valve (512) and enters the wine bottle (10a) through the first pump (501), the second control valve (513) and an air flow channel (11) so as to increase the gas pressure above the wine liquid in the wine bottle (10a). Under the action of the gas pressure, the wine liquid enters a wine suction pipe (20) and flows out of the wine outlet pipe (41) through a first liquid flow channel (12) and the air-mixing decantation cavity (40). Moreover, the second pump (502) works, such that air enters the air-mixing decantation cavity (40) from the second pump (502) and is mixed with the wine liquid in the air-mixing decantation cavity (40) to achieve air-mixing decantation.

## Description

This application claims priorities to Chinese Patent Application No. 202210134043.3, filed on February 14, 2022; Chinese Patent Application No. 202222210760.8, filed on August 22, 2022; Chinese Patent Application No. 202211006376.4, filed on August 22, 2022; and Chinese Patent Application No. 202211006367.5, filed on August 22, 2022, which are incorporated herein by reference in their entireties.

### TECHNICAL FIELD

The present disclosure relates to the technical field of refrigeration equipment, and in particular, to a refrigeration apparatus.

### BACKGROUND

In daily life, more and more people choose to drink wine with meals. It is well known that when drinking wine, the wine need to be sobered up first.

In general, when sobering up, it is necessary to pour the wine into a decanter and shake the decanter for 30 minutes to 120 minutes to allow the tannins and other substances in the wine to fully contact and react with the oxygen in the air, so as to reduce the sour feeling of the wine after drinking the wine.

### SUMMARY

In an aspect, a refrigeration apparatus is provided, and includes a cabinet and a decanting device. The cabinet defines a storage compartment. The decanting device is disposed in the storage compartment. An accommodating space for placing a wine bottle is defined in the decanting device. The wine bottle includes a mouth, a bottle bottom and an inner cavity. The decanting device is configured to extract wine from the wine bottle, inject air into the extracted wine to decant the wine, and extract air from the wine bottle. The decanting device includes a wine dispensing mechanism, a first one-way valve, a first control valve, a second control valve, a first pump, a second pump, a gas-mixing and decanting cavity, and a wine dispensing pipe. The wine dispensing mechanism is connected to the mouth and configured to transport the wine in the wine bottle to outside of the wine bottle. The wine dispensing mechanism includes an air flow channel, a first liquid flow channel and a wine suction pipe. The air flow channel is communicated with the inner cavity. An end of the wine suction pipe is communicated with the first liquid flow channel, and another end of the wine suction pipe is located in the inner cavity and proximate to the bottle bottom. The first one-way valve is disposed in the first liquid flow channel. The first one-way valve includes a first inlet end and a first outlet end, and the first inlet end is closer to an end of the first liquid flow channel communicated with the wine suction pipe than the first outlet end. A second end of the first control valve is communicated with the atmosphere, and a third end of the first control valve is connected to the air flow channel. A second end of the second control valve is communicated with the atmosphere, and a third end of the second control valve is connected to the third end of the first control valve and the air flow channel. A first end of the first pump being is connected to a first end of the first control valve, and a second end of the first pump is connected to a first end of the second control valve. A first end of the second pump is communicated with the atmosphere. The gas-mixing and decanting cavity is connected to a second end of the second pump and the first liquid flow channel. The wine dispensing pipe is communicated with the gas-mixing and decanting cavity. When the wine is dispensed, the second end of the first control valve is turned on, and the third end of the first control valve is turned off; the second end of the second control valve is turned off, and the third end of the second control valve is turned on; the first pump is operated, so that air enters the first control valve, and flows into the wine bottle through the first pump, the second control valve and the air flow channel, so as to increase a gas pressure above the wine in the wine bottle; due to an action of the gas pressure, the wine enters the wine suction pipe, and flows out from the wine dispensing pipe through the first liquid flow channel and the gas-mixing and decanting cavity; and, the second pump is operated, so that the air enters the gas-mixing and decanting cavity from the second pump, and mixes with the wine in the gas-mixing and decanting cavity, so as to achieve gas-mixing and decanting. When vacuuming is performed, the second pump is stopped, the second end of the first control valve is turned off, and the third end of the first control valve is turned on; the second end of the second control valve is turned on, and the third end of the second control valve is turned off; the first pump is operated, so that the air in the wine bottle enters the air flow channel, flows to the second control valve through the first control valve and the first pump, and is discharged into the atmosphere from the second control valve.

In another aspect, a refrigeration apparatus is provided, and includes a cabinet and a decanting device. The cabinet defines a storage compartment. The decanting device is disposed in the storage compartment. An accommodating space for placing a wine bottle is defined in the decanting device. The wine bottle includes a mouth, a bottle bottom and an inner cavity. The decanting device is configured to extract wine from the wine bottle, and inject air into the extracted wine to decant the wine. The decanting device includes a wine dispensing mechanism, a first one-way valve, a third control valve, a fourth control valve, a first pump, a second pump, a gas-mixing and decanting cavity, a wine dispensing pipe, a clean water sealing box and a dirty water box. The wine dispensing mechanism is connected to the mouth and configured to transport the wine in the wine bottle to outside of the wine bottle. The wine dispensing mechanism includes an airflow channel, a first liquid flow channel, a second liquid flow channel and a wine suction pipe. The air flow channel is communicated with the inner cavity. An end of the wine suction pipe is communicated with the first liquid flow channel, and another end of the wine suction pipe is located in the inner cavity and proximate to the bottle bottom. The first one-way valve is disposed in the first liquid flow channel. The first one-way valve includes a first inlet end and a first outlet end, and the first inlet end is closer to an end of the first liquid flow channel communicated with the wine suction pipe than the first outlet end. The second liquid flow channel is bidirectionally communicated with the first outlet end, and the second liquid flow channel is unidirectionally communicated with the first inlet end, so as to prevent liquid in the second liquid flow channel from entering the wine bottle through the first one-way valve. A first end of the first pump is communicated with the atmosphere. A first end of the third control valve is connected to the air flow channel, and a second end of the third control valve is connected to the second end of the first pump. A first end of the fourth control valve is connected to the second end of the third control valve and the second end of the first pump. A first end of the second pump is communicated with the atmosphere. The gas-mixing and decanting cavity is connected to a second end of the second pump and the first liquid flow channel. The wine dispensing pipe is communicated with the gas-mixing and decanting cavity. The second one-way valve includes a second inlet end and a second outlet end. The second outlet end is connected to the second liquid flow channel. The clean water sealing box includes a clean water box body and a clean water outlet pipe. The clean water box body is connected to a second end of the fourth control valve. An end of the clean water outlet pipe is located in the clean water box body and proximate to a bottom of the clean water sealing box, and another end of the clean water outlet pipe is connected to the second inlet end. The dirty water box is connected to the wine dispensing pipe. When the wine is dispensed, the fourth control valve is turned off, and the third control valve is turned on; the first pump is operated, so that air enters the first pump, and flows into the wine bottle through the third control valve and the air flow channel, so as to increase a gas pressure above wine in the wine bottle; due to an action of the gas pressure, the wine enters the wine suction pipe and flows out from the wine dispensing pipe through the first liquid flow channel and the gas-mixing and decanting cavity. And, the second pump is operated, so that air enters the gas-mixing and decanting cavity from the second pump, and is mixed with the wine in the gas-mixing and decanting cavity, so as to achieve gas-mixing and decanting. The decanting device is further configured to clean the wine dispensing mechanism, the gas-mixing and decanting cavity and the wine dispensing pipe; when cleaning is performed, the fourth control valve is turned on and the third control valve is turned off; the first pump is operated and the second pump is stopped, so that air enters the first pump and enters the clean water sealing box through the fourth control valve, so as to increase a gas pressure above the clean water in the clean water sealing box; due to an action of the gas pressure, the clean water enters the clean water outlet pipe, flows to the wine dispensing pipe after flowing through the second one-way valve, the second liquid flow channel, the first liquid flow channel and the gas-mixing and decanting cavity, and is discharged from the wine dispensing pipe to the dirty water box.

In yet another aspect, a refrigeration apparatus is provided, and includes a cabinet and a decanting device. The cabinet defines a storage compartment. The decanting device is disposed in the storage compartment. An accommodating space for placing a wine bottle is defined in the decanting device. The wine bottle includes a mouth, a bottle bottom and an inner cavity. The decanting device is configured to extract wine from the wine bottle, and inject air into the extracted wine to decant the wine. The decanting device includes a wine dispensing mechanism, a first one-way valve, a first control valve, a second control valve, a third control valve, a fourth control valve, a first pump, a second pump, a gas-mixing and decanting cavity, a wine dispensing pipe, a clean water sealing box and a dirty water box. The wine dispensing mechanism is connected to the mouth and configured to transport the wine in the wine bottle to outside of the wine bottle. The wine dispensing mechanism includes an air flow channel, a first liquid flow channel, a second liquid flow channel and a wine suction pipe. The air flow channel is communicated with the inner cavity. An end of the wine suction pipe is communicated with the first liquid flow channel, and another end of the wine suction pipe is located in the inner cavity and proximate to the bottle bottom. The first one-way valve is disposed in the first liquid flow channel. The first one-way valve includes a first inlet end and a first outlet end, and the first inlet end is closer to an end of the first liquid flow channel communicated with the wine suction pipe than the first outlet end. The second liquid flow channel is bidirectionally communicated with the first outlet end, and the second liquid flow channel is unidirectionally communicated with the first inlet end, so as to prevent liquid in the second liquid flow channel from entering the wine bottle through the first one-way valve. A second end of the first control valve is communicated with the atmosphere, and a third end of the first control valve is connected to the air flow channel. A second end of the second control valve is communicated with the atmosphere, and a third end of the second control valve is connected to the third end of the first control valve and the air flow channel. A first end of the first pump is connected to a first end of the first control valve. A first end of the third control valve is connected to a first end of the second control valve, and a second end of the third control valve is connected to a second end of the first pump. The second one-way valve includes a second inlet end and a second outlet end. The second outlet end is connected to the second liquid flow channel. The clean water sealing box includes a clean water box body and a clean water outlet pipe. An end of the clean water outlet pipe is located in the clean water box body and is proximate to a bottom of the clean water sealing box, and another end of the clean water outlet pipe is connected to the second inlet end. The dirty water box is connected to the wine dispensing pipe. A first end of the fourth control valve is connected to the second end of the third control valve and the second end of the first pump, and a second end of the fourth control valve is connected to the clean water box body. A first end of the second pump is communicated with the atmosphere. The gas-mixing and decanting cavity is connected to a second end of the second pump and the first liquid flow channel. When the wine is dispensed, the fourth control valve is turned off and the fifth valve is turned on; the second end of the first control valve is turned on and the third end of the first control valve is turned off; the second end of the second control valve is turned off and the third end of the second control valve is turned on; the first pump is operated, so that air enters the first control valve, and flows into the wine bottle through the first pump, the third control valve, the second control valve and the air flow channel, so as to increase a gas pressure above the wine in the wine bottle; due to an action of the gas pressure, the wine enters the wine suction pipe and flows out from the wine dispensing pipe through the first liquid flow channel and the gas-mixing and decanting cavity; and, the second pump is operated, so that air enters the gas-mixing and decanting cavity from the second pump, and is mixed with the wine in the gas-mixing and decanting cavity, so as to achieve gas-mixing and decanting. The decanting device is further configured to extract air from the wine bottle; when vacuuming is performed, the fourth control valve is turned off and the fifth valve is turned on; the second end of the first control valve is in a turn-off state, and the third end of the first control valve is in a turn-on state; the second end of the second control valve is in a turn-on state, and the third end of the second control valve is in a turn-off state; the first pump is operated, and the second pump is stopped, so that air in the wine bottle enters the air flow channel, flows to the second control valve through the first control valve, the first pump, the third control valve, and is discharged to the atmosphere from the second control valve. The decanting device is further configured to clean the wine dispensing mechanism, the gas-mixing and decanting cavity and the wine dispensing pipe; during cleaning is performed, the fourth control valve is turned on, and the second control valve and the third control valve are turned off; the second end of the first control valve is in a turn-on state, and the third end of the first control valve is in a turn-off state; the first pump is operated, and the second pump is stopped, so that air enters the first control valve, and flows into the clean water box through the first pump and the fourth control valve, so as to increase a gas pressure above the clean water in the clean water box; due to an action of the gas pressure, the clean water enters the clean water outlet pipe, flows to the wine dispensing pipe through the second one-way valve, the second liquid flow channel, the first liquid flow channel and the gas-mixing and decanting cavity, and is discharged from the wine dispensing pipe.

### BRIEF DESCRIPTION OF THE DRAWINGS

In order to describe the technical solutions in the present disclosure more clearly, accompanying drawings to be used in some embodiments of the present disclosure will be introduced briefly below.
FIG. 1A is a perspective view of a refrigeration apparatus, in accordance with some embodiments;
FIG. 1B is a schematic diagram of a refrigeration apparatus, in accordance with some embodiments;
FIG. 2 is a perspective view of a decanting device of a refrigeration apparatus, in accordance with some embodiments;
FIG. 3 is an exploded view of a wine dispensing mechanism of a refrigeration apparatus, in accordance with some embodiments;
FIG. 4 is a perspective view of a wine dispensing mechanism of a refrigeration apparatus, in accordance with some embodiments;
FIG. 5 is a perspective view of a wine suction pipe, in accordance with some embodiments;
FIG. 6 is a partial sectional view of a wine dispensing mechanism of a refrigeration apparatus, in accordance with some embodiments;
FIG. 7 is an exploded view of a wine dispensing mechanism of a refrigeration apparatus from another perspective, in accordance with some embodiments;
FIG. 8 is an exploded view of a wine dispensing mechanism of a refrigeration apparatus, from yet another perspective, in accordance with some embodiments;
FIG. 9 is an exploded view of a joint of a refrigeration apparatus, in accordance with some embodiments;
FIG. 10 is an exploded view of a joint and a wine dispensing mechanism of a refrigeration apparatus, in accordance with some embodiments;
FIG. 11 is a perspective view of a decanting device of a refrigeration apparatus from another perspective, in accordance with some embodiments;
FIG. 12 is a partial enlarged view of the circle A in FIG. 11;
FIG. 13 is a diagram showing a partial structure of a decanting device of a refrigeration apparatus, in accordance with some embodiments;
FIG. 14 is a diagram showing a partial structure of a decanting device of a refrigeration apparatus from another perspective, in accordance with some embodiments;
FIG. 15 is a diagram showing a partial structure of a decanting device of a refrigeration apparatus from yet another perspective, in accordance with some embodiments;
FIG. 16 is an exploded view of a fixing member, a connecting rod, a rocking rod, and a wine dispensing mechanism of a refrigeration apparatus, in accordance with some embodiments;
FIG. 17 is another exploded view of a fixing member, a connecting rod, a rocking rod and a wine dispensing mechanism of a refrigeration apparatus, in accordance with some embodiments;
FIG. 18 is an exploded view of a wine dispensing mechanism, a connecting rod, and a rocking rod of a refrigeration apparatus, in accordance with some embodiments;
FIG. 19 is another diagram showing a partial structure of a refrigeration apparatus, in accordance with some embodiments;
FIG. 20 is a diagram showing a partial structure of a bracket of a refrigeration apparatus, in accordance with some embodiments;
FIG. 21 is a perspective view of an integrated box of a refrigeration apparatus, in accordance with some embodiments;
FIG. 22 is an exploded view of a fresh water box, a dirty water box, and a bracket of a refrigeration apparatus, in accordance with some embodiments;
FIG. 23 is an exploded view of a fresh water box, a dirty water box, and a bracket of a refrigeration apparatus from another perspective, according to some embodiments from another perspective;
FIG. 24 is an exploded view of a fresh water box, a dirty water box, and a bracket of a refrigeration apparatus from yet another perspective, according to some embodiments from another perspective;
FIG. 25 is an exploded view of a fresh water box, a dirty water box, and a bracket of a refrigeration apparatus from yet another perspective, according to some embodiments from another perspective;
FIG. 26 is an exploded view of a clean water box, a dirty water box, and a bracket of a refrigeration apparatus from yet another perspective, according to some embodiments from another perspective;
FIG. 27 is a perspective view of a bracket and a control box of a refrigeration apparatus, in accordance with some embodiments;
FIG. 28 is an exploded view of a control box of a refrigeration apparatus, in accordance with some embodiments;
FIG. 29 is a diagram showing a principle of a decanting device of a refrigeration apparatus performing a wine dispensing operation, in accordance with some embodiments;
FIG. 30 is a diagram showing a principle of a decanting device of a refrigeration apparatus performing a vacuuming operation, in accordance with some embodiments;
FIG. 31 is a diagram showing a principle of a decanting device of a refrigeration apparatus performing an emptying operation, in accordance with some embodiments;
FIG. 32 is a diagram showing a principle of another decanting device of a refrigeration apparatus performing a wine dispensing operation, in accordance with some embodiments;
FIG. 33 is a diagram showing a principle of another decanting device of a refrigeration apparatus performing a cleaning operation, in accordance with some embodiments;
FIG. 34 is a diagram showing a principle of another decanting device of a refrigeration apparatus performing an emptying operation, in accordance with some embodiments;
FIG. 35 is a diagram showing a principle of yet another decanting device of a refrigeration apparatus performing a wine dispensing operation, in accordance with some embodiments;
FIG. 36 is a diagram showing a principle of yet another decanting device of a refrigeration apparatus performing a vacuuming operation, in accordance with some embodiments;
FIG. 37 is a diagram showing a principle of yet another decanting device of a refrigeration apparatus performing a cleaning operation, in accordance with some embodiments; and
FIG. 38 is a diagram showing a principle of yet another decanting device of a refrigeration apparatus performing an emptying operation, in accordance with some embodiments.

### DETAILED DESCRIPTION

The technical solutions in some embodiments of the present disclosure will be described clearly and completely with reference to the accompanying drawings. Obviously, the described embodiments are merely some but not all of embodiments of the present disclosure. All other embodiments obtained by a person of ordinary skill in the art based on embodiments of the present disclosure shall be included in the protection scope of the present disclosure.

In daily life, more and more people choose to drink wine with meals. Before drinking the wine, decanting it may fully release the aroma of the wine and improve the taste.

In general, when decanting the wine, a main method is to shake a wine container (e.g., a wine glass) to make the wine rotate along a wall of the wine glass, mix with the air and fully oxidize. Wines with rich flavor and firm taste, such as Barolo and Amarone, need to be decanted for about 2 hours because of a high tannin content and a large body. Wines with light body, such as Pinot Noir, also need to be decanted for about 30 to 60 minutes. This decanting method takes too long and requires decanting in advance, which is inconvenient for the users to drink.

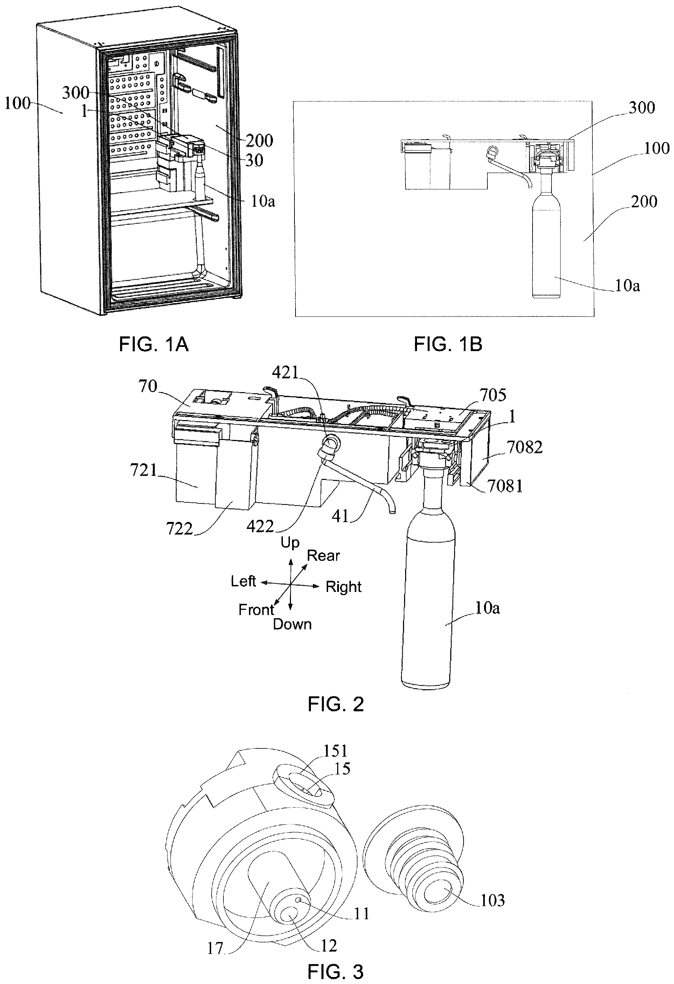

Some embodiments of the present disclosure provide a refrigeration apparatus 1000. Referring to FIGS. 1A and 1B, the refrigeration apparatus 1000 includes a cabinet 100 and a decanting device 300 (i.e., a module 300) for decanting wine. A low-temperature storage compartment 200 is defined in the cabinet 100. The decanting device 300 is disposed in the storage compartment 200, and the decanting device 300 has an accommodating space for placing a wine bottle. The decanting device 300 is configured to dispense and/or decant the bottled wine.

In some embodiments, the decanting device 300 is further configured to vacuum the bottled wine.

In some embodiments, the decanting device 300 is further configured to clean the pipes and components on the wine dispensing path.

It will be noted that the refrigeration apparatus 1000 may be configured as a wine cabinet, a refrigerator or a freezer, etc.

### [Wine dispensing mechanism 1]

Referring to FIGS. 2 to 4, the decanting device 300 includes a wine dispensing mechanism 1. The wine dispensing mechanism 1 is connected to a mouth of a wine bottle 10a and is configured to extract the wine in the wine bottle 10a out of the wine bottle. The wine dispensing mechanism 1 is adapted to the mouth of the wine bottle 10a. The wine dispensing mechanism 1 includes an air flow channel 11, a first liquid flow channel 12 and a second liquid flow channel 13. The air flow channel 11 and the first liquid flow channel 12 are respectively communicated with an inner cavity of the wine bottle 10a. The second liquid flow channel 13 is communicated with the first liquid flow channel 12. The air flow channel 11 and the first liquid flow channel 12 respectively extend through the wine dispensing mechanism 1.

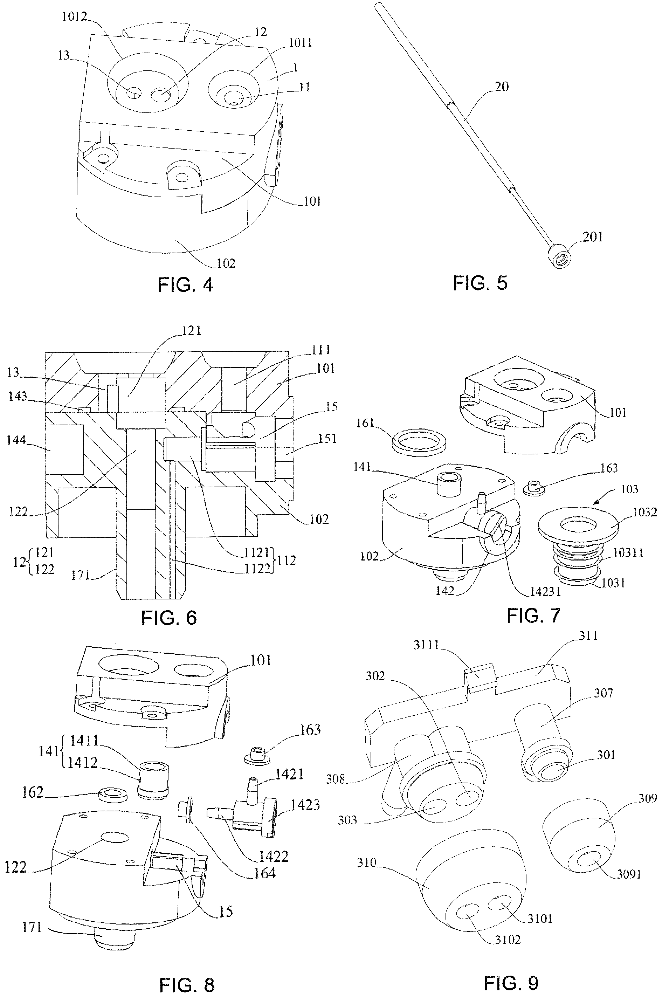

Referring to FIG. 5, the decanting device 300 further includes a wine suction pipe 20 for sucking the wine from the wine bottle 10a. An end of the wine suction pipe 20 is communicated with the first liquid flow channel 12, and another end of the wine suction pipe 20 (i.e., an end away from the wine dispensing mechanism 1) extends into the wine bottle 10a and is proximate to a bottle bottom of the wine bottle 10a. In this way, the wine suction pipe 20 is immersed in the wine in the wine bottle 10a, and the residual wine in the wine bottle 10a may be reduced when the wine bottle 10a is emptied.

For example, the wine suction pipe 20 is a telescopic wine suction pipe, and the end of the wine suction pipe 20 away from the wine dispensing mechanism 1 has a flared section 201, so as to increase an inner diameter of the wine suction pipe 20, increase the cross-sectional area of wine suction, increase the wine suction amount, and avoid interruption of wine dispensing.

In some embodiments, the wine suction pipe 20 may be a multi-section structure. For example, the wine suction pipe 20 is a three-section structure, that is, the wine suction pipe 20 includes an upper wine suction pipe, a middle wine suction pipe and a lower wine suction pipe. The lower wine suction pipe is communicated with the middle wine suction pipe and is slidable relative to the middle wine suction pipe. The middle wine suction pipe is communicated with the upper wine suction pipe and is slidable relative to the upper wine suction pipe. The flared section 201 is located at the lower end of the lower wine suction pipe. In this way, in a case where wine bottles 10a of different heights are placed in the decanting device 300, the sections of the wine suction pipe may be adjusted, so that the flared section 201 is proximate to the bottle bottom of the wine bottle 10a, thereby reducing the residual wine in the wine bottle 10a when the wine bottle 10a is emptied.

Referring to FIGS. 6 and 7, the wine dispensing mechanism 1 further includes a fourth valve 141 (i.e., a first one-way valve), and the fourth valve 141 is installed in the first liquid flow channel 12. The fourth valve 141 includes an inlet end (i.e., a first inlet end) and an outlet end (i.e., a first outlet end). The inlet end of the fourth valve 141 is located at a side of the fourth valve 141 proximate to an end of the first liquid flow channel 12 communicated with the wine suction pipe 20, and the outlet end of the fourth valve 141 is located at a side of the fourth valve 141 away from the end of the first liquid flow channel 12 communicated with the wine suction pipe 20. The inlet end and the outlet end of the fourth valve 141 are unidirectionally communicated, so that the liquid in the first liquid flow channel 12 can not flow into the wine bottle 10a through the fourth valve 141, and contaminate the wine in the wine bottle 10a.

The second liquid flow channel 13 is bidirectionally communicated with the outlet end of the fourth valve 141 and is unidirectionally communicated with the inlet end of the fourth valve 141. By disposing the fourth valve 141, the wine in the wine bottle 10a may flow out of the wine bottle, and external liquid or gas may be prevented from flowing into the wine bottle 10a and contaminating the wine in the wine bottle 10a. For example, the fourth valve 141 is a one-way valve.

Referring to FIGS. 6 to 8, the wine dispensing mechanism 1 includes a first cover body 101 and a second cover body 102. The first cover body 101 is located above the second cover body 102, and the first cover body 101 is detachably connected to the second cover body 102. For example, the first cover body 101 and the second cover body 102 are connected through a fastener (e.g., a screw).

Referring to FIG. 6, the first liquid flow channel 12 includes a first upper liquid flow channel 121 (i.e., a first sub-liquid flow channel) defined in the first cover body 101 and a first lower liquid flow channel 122 (i.e., a second sub-liquid flow channel) defined in the second cover body 102.

For example, a lower end of the fourth valve 141 is the inlet end of the fourth valve 141, and an upper end of the fourth valve 141 is the outlet end of the fourth valve 141. The inlet end of the fourth valve 141 is located in the first lower liquid flow channel 122, and the outlet end of the fourth valve 141 extends into the first upper liquid flow channel 121, so that the first lower liquid flow channel 122 is connected to the first upper liquid flow channel 121, and it is convenient to install the fourth valve 141 in the first liquid flow channel 12.

Referring to FIG. 8, the fourth valve 141 has a fourth valve housing 1411 (i.e., a housing), a side portion of the fourth valve housing 1411 is opened to form a fourth valve opening 1412 (i.e., a valve opening), the fourth valve opening 1412 is bidirectionally communicated with the outlet end of the fourth valve 141, and the fourth valve opening 1412 is unidirectionally communicated with the inlet end of the fourth valve 141. That is, the liquid at the inlet end of the fourth valve 141 is capable of flowing to the fourth valve opening 1412, and the liquid at the fourth valve opening 1412 is not capable of flowing to the inlet end of the fourth valve 141.

The second liquid flow channel 13 is communicated with the fourth valve opening 1412, and the second liquid flow channel 13 is communicated with the first liquid flow channel 12 through the fourth valve opening 1412 and the outlet end of the fourth valve 141.

It can be understood that by disposing the fourth valve opening 1412, it is convenient for connecting the second liquid flow channel 13 and the first liquid flow channel 12, so that the liquid in the second liquid flow channel 13 is capable of entering the first liquid flow channel 12, but is not capable of entering the wine bottle 10a. In this way, it may be prevented that external liquid or gas contaminates the wine in the wine bottle 10a.

For example, referring to FIG. 8, the second liquid flow channel 13 is defined in the first cover body 101, and the fourth valve opening 1412 is located in a portion of the fourth valve housing 1411 inserted into the first cover body 101, that is, the fourth valve opening 1412 is located in the first cover body 101. A lower end of the second liquid flow channel 13 extends through the first cover body 101.

In some embodiments, the second liquid flow channel 13 includes a second upper liquid flow channel defined in the first cover body 101 and a second lower liquid flow channel defined in the second cover body 102. The fourth valve opening 1412 is located in the portion of the fourth valve housing 1411 inserted into the first cover body 101, or, the fourth valve opening 1412 is located in a portion of the fourth valve housing 1411 inserted into the second cover body 102, or, the fourth valve opening 1412 is located at a side portion of the fourth valve housing 1411 and located at the connection between the first cover body 101 and the second cover body 102.

Referring to FIGS. 6 and 7, the wine dispensing mechanism 1 further includes a first sealing ring 161. The first sealing ring 161 is disposed between the first cover body 101 and the second cover body 102 and sleeved on an outer periphery of the first liquid flow channel 12, so as to seal the portion of the first liquid flow channel 12 located at the connection between the first cover body 101 and the second cover body 102. Positions of the first cover body 101 and/or the second cover body 102 corresponding to the first sealing ring 161 are respectively provided with sealing ring grooves 143 matching with the first sealing ring 161, so as to facilitate disposing the first sealing ring 161 between the first cover body 101 and the second cover body 102.

In some embodiments, referring to FIGS. 6 and 7, the first sealing ring 161 is located at the outer periphery of the second liquid flow channel 13. In a case where the second liquid flow channel 13 is disposed to extend through the first cover body 101, the first sealing ring 161 may simultaneously seal the first liquid flow channel 12 and the second liquid flow channel 13 located at the connection portions between the first cover body 101 and the second cover body 102.

Referring to FIG. 8, the wine dispensing mechanism 1 further includes a second sealing ring 162. The second sealing ring 162 is disposed between the inlet end of the fourth valve 141 and the first lower liquid flow channel 122, so as to seal the inlet end of the fourth valve 141 and the first lower liquid flow channel 122, thereby preventing the liquid in the first lower liquid flow channel 122 from flowing out of the fourth valve 141 through a gap between the inlet end of the fourth valve 141 and the first lower liquid flow channel 122, and ensuring that the liquid in the first lower liquid flow channel 122 flows into the fourth valve 141 and then is discharged from the fourth valve 141. Longitudinal sections of the first sealing ring 161 and the second sealing ring 162 along their extending directions are circular, elliptical or rectangular.

Referring to FIGS. 6 to 8, the wine dispensing mechanism 1 further includes a switch 142. The switch 142 is installed in the air flow channel 11 and is configured to disconnect or connect the air flow channel 11.

Referring to FIGS. 6 to 8, the air flow channel 11 includes an upper air flow channel 111 (i.e., a first air flow sub-channel) defined in the first cover body 101 and a lower air flow channel 112 (i.e., a second air flow sub-channel) defined in the second cover body. For example, the switch 142 is configured to disconnect or connect the upper air flow channel 111 and the lower air flow channel 112.

For example, the switch 142 includes a switch first air pipe 1421 and a switch second air pipe 1422. The switch first air pipe 1421 is inserted in the upper air flow channel 111 and communicated with the upper air flow channel 111. The switch second air pipe 1422 is inserted in the lower air flow channel 112 and communicated with the lower air flow channel 112. In this way, by controlling the switch 142, the switch first air pipe 1421 and the switch second air pipe 1422 may be connected or disconnected, thereby connecting or disconnecting the upper air flow channel 111 and the lower air flow channel 112.

For example, the switch 142 is a knob-type switch, that is, the switch 142 further includes a rotating core 1423. By rotating the rotating core 1423, the switch first air pipe 1421 and the switch second air pipe 1422 may be connected or disconnected, that is, the upper air flow channel 111 and the lower air flow channel 112 may be connected or disconnected, thereby controlling the connection or disconnection between the inside of the wine bottle 10a and the outside.

Referring to FIGS. 6 to 8, a switch installation space 15 communicated with the upper air flow channel 111 and the lower air flow channel 112 is defined between the first cover body 101 and the second cover body 102. The switch installation space 15 has a switch installation open end 151 facing towards a side of the wine dispensing mechanism 1. The switch first air pipe 1421 is disposed on a side of the rotating core 1423, and the switch second air pipe 1422 is disposed on a side of the rotating core 1423 away from the switch installation open end 151.

For example, the switch 142 is connected to the second cover body 102 through the switch installation open end 151, and the switch second air pipe 1422 is inserted in the lower air flow channel 112. The first cover body 101 is connected to the second cover body 102, and the switch first air pipe 1421 is inserted in the upper air flow channel 111.

Referring to FIG. 6, the lower air flow channel 112 includes a lower air flow channel inserting section 1121 connected to the switch second air pipe 1422 and a lower air flow channel communication section 1122 communicated with the inner cavity of the wine bottle 10a. For example, the lower air flow channel inserting section 1121 is horizontally disposed, and the lower air flow channel communication section 1122 is vertically disposed.

Referring to FIGS. 6 to 8, the wine dispensing mechanism 1 further includes a third sealing ring 163. The third sealing ring 163 is sleeved on an outer periphery of the switch first air pipe 1421 and is located between the switch first air pipe 1421 and an inner wall of the upper air flow channel 111, so as to seal a gap between the switch first air pipe 1421 and the inner wall of the upper air flow channel 111, thereby preventing air from flowing out from the gap between the switch first air pipe 1421 and the upper air flow channel 111.

For example, the third sealing ring 163 includes a first pressing section and a first limiting section. The first pressing section is connected to the first limiting section.

The first pressing section is sleeved on an outer periphery of the switch first air pipe 1421 and inserted into the upper air flow channel 111, so as to seal the gap between the switch first air pipe 1421 and the upper air flow channel 111. The first limiting section is located in the switch installation space 15. The first limiting section is located radially outside the first pressing section and extends along a circumferential direction of the first pressing section. When the first pressing section (or the switch first air pipe 1421) is inserted into the upper air flow channel 111, the first limiting section abuts against a lower end of the upper air flow channel 111, so as to prevent the third sealing ring 163 from completely entering the upper air flow channel 111.

Referring to FIGS. 6 to 8, the wine dispensing mechanism 1 further includes a fourth sealing ring 164. The fourth sealing ring 164 is sleeved on an outer periphery of the switch second air pipe 1422 and located between the switch second air pipe 1422 and an inner wall of the lower air flow channel 112, so as to seal a gap between the switch second air pipe 1422 and the inner wall of the lower air flow channel 112, thereby preventing air from flowing out from the gap between the switch second air pipe 1422 and the lower air flow channel 112.

For example, the fourth sealing ring 164 includes a second pressing section and a second limiting section. The second pressing section is connected to the second limiting section.

The second pressing section is sleeved on an outer periphery of the switch second air pipe 1422 and inserted into the lower air flow channel 112, so as to seal the gap between the switch second air pipe 1422 and the lower air flow channel 112. The second limiting section is located in the switch installation space 15. The second limiting section is located radially outside the second pressing section and extends along the circumferential direction of the second pressing section. In a case where the second pressing section (or the switch second air pipe 1422) is inserted into the lower air flow channel 112, the second limiting section abuts against an end of the lower air flow channel 112 proximate to the switch installation space 15, so as to prevent the fourth sealing ring 164 from completely entering the lower air flow channel 112.

Referring to FIGS. 6 to 8, the wine dispensing mechanism 1 further includes a wine dispensing column 171. The wine dispensing column 171 extends downwards from a lower surface of the second cover body 102 and is inserted into the mouth of the wine bottle 10a. An end of the air flow channel 11 communicated with the inner cavity of the wine bottle 10a and an end of the first liquid flow channel 12 communicated with the inner cavity of the wine bottle 10a are located at the lower end of the wine dispensing column 171.

Referring to FIGS. 3 and 7, the wine dispensing mechanism 1 further includes a mouth sealing sleeve 103. The mouth sealing sleeve 103 is sleeved on the outer periphery of the wine dispensing column 171. An end of the mouth sealing sleeve 103 is inserted into the mouth of the wine bottle 10a and located between the mouth of the wine bottle 10a and the wine dispensing column 171. Another end of the mouth sealing sleeve 103 is located outside the wine bottle 10a. The mouth sealing sleeve 103 may seal a gap between the wine dispensing column 171 and the inner wall of the wine bottle 10a, and prevent air from entering the wine bottle 10a and oxidizing the wine, which may cause the wine to deteriorate and the taste to deteriorate.

For example, referring to FIG. 7, the mouth sealing sleeve 103 includes a mouth sealing section 1031 and a mouth limiting section 1032. The mouth limiting section 1032 is disposed outside the mouth sealing section 1031 along a radial direction of the mouth sealing section 1031 and extends along a circumferential direction of the mouth sealing section 1031. The mouth limiting section 1032 is located at an end of the mouth sealing section 1031 away from the bottle bottom of the wine bottle 10a.

The mouth sealing section 1031 is inserted into the mouth of the wine bottle 10a to seal a gap between the mouth of the wine bottle 10a and the wine dispensing column 171. The mouth limiting section 1032 abuts against an end edge of the mouth of the wine bottle 10a to limit the mouth sealing section 1031, thereby preventing the mouth limiting section 1032 from entering the wine bottle 10a.

An outer periphery of the mouth sealing section 1031 is provided with a sealing protrusion 10311 disposed along the circumferential direction of the mouth sealing section 1031 to increase the friction between the mouth sealing section 1031 and the inner wall of the wine bottle 10a, thereby preventing the wine bottle 10a from falling off the wine dispensing mechanism 1 and improving the sealing between the mouth sealing sleeve 103 and the wine bottle 10a.

For example, the sealing protrusion 10311 may be configured as a continuous circle (i.e., the sealing protrusion 10311 is ring-shaped). A radial outer end of the sealing protrusion 10311 is inclined in a direction away from the bottle bottom of the wine bottle 10a to increase the friction between the mouth sealing section 1031 and the inner wall of the wine bottle 10a, thereby preventing the wine bottle 10a from falling off the wine dispensing mechanism 1.

### [Joint 30]

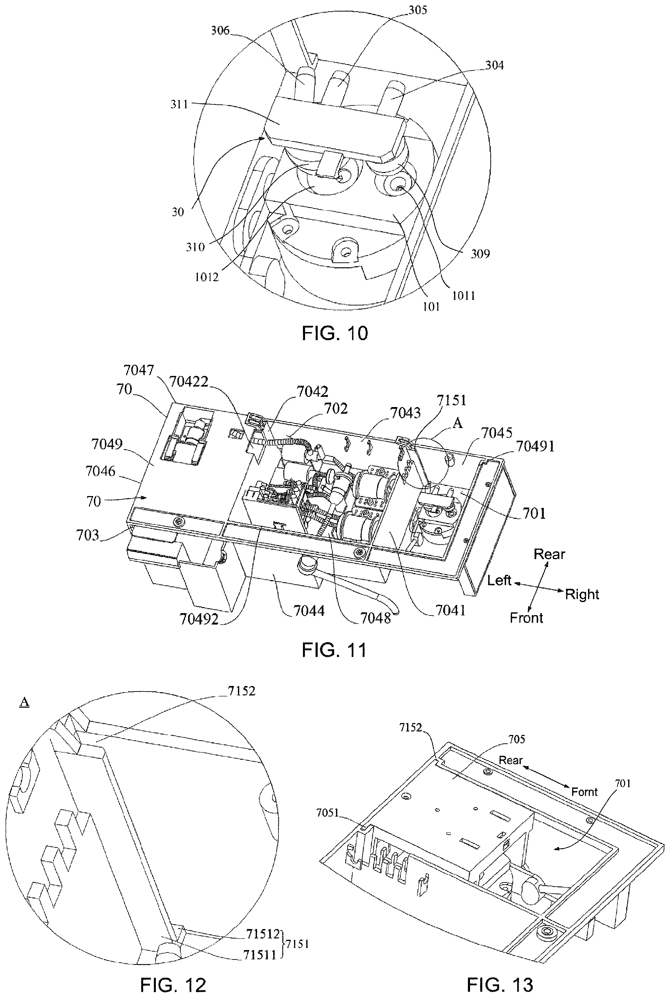

Referring to FIGS. 9 and 10, the decanting device 300 further includes a joint 30. The joint 30 is cooperated with the wine dispensing mechanism 1, so that the joint has a communicating function. The joint 30 is detachably connected to the wine dispensing mechanism 1.

A joint air flow channel 301, a joint first liquid flow channel 302, and a joint second liquid flow channel 303 are defined in the joint 30. In a case where the joint is connected to the wine dispensing mechanism 1, the joint air flow channel 301 corresponds to the air flow channel 11 and is communicated with the air flow channel 11, the first liquid flow channel 12 corresponds to the joint first liquid flow channel 302 and is communicated with the joint first liquid flow channel 302, and the second liquid flow channel 13 corresponds to the joint second liquid flow channel 303 and is communicated with the joint second liquid flow channel 303.

The joint 30 further includes a first connecting pipe 304, a second connecting pipe 305 and a third connecting pipe 306. The first connecting pipe 304 is communicated with an end of the joint air flow channel 301 away from the wine dispensing mechanism 1. The second connecting pipe 305 is communicated with an end of the joint first liquid flow channel 302 away from the wine dispensing mechanism 1. The third connecting pipe 306 is communicated with an end of the joint second liquid flow channel 303 away from the wine dispensing mechanism 1.

The joint 30 further includes a joint fixing portion 311, a joint first column 307 and a joint second column 308. The joint first column 307 and the joint second column 308 are disposed on a surface of the joint fixing portion 311 proximate to the first cover body 101, and extend towards the first cover body 101 respectively. The joint air flow channel 301 is defined in the joint first column 307 and extends through a lower end of the joint first column 307. The joint first liquid flow channel 302 and the joint second liquid flow channel 303 are defined in the joint second column 308 and penetrate a lower end of the joint second column 308. For example, the joint first liquid flow channel 302 and the joint second liquid flow channel 303 are spaced apart from each other in the joint second column 308. For example, the joint first liquid flow channel 302 is parallel to the joint second liquid flow channel 303, which is conducive to reducing a dimension of the joint second column 308 along a radial direction of the joint second column 308. Or, the joint first liquid flow channel 302 is not parallel to the joint second liquid flow channel 303, which is conducive to improving the flexibility of the pipe arrangement in the joint 30.

The joint 30 is detachably sealed and connected to the wine dispensing mechanism 1, and the joint 30 further includes a first sealing sleeve 309 sleeved on the lower end of the joint first column 307 and a second sealing sleeve 310 sleeved on the lower end of the joint second column. The lower end of the first sealing sleeve 309 is provided with a first sealing sleeve through hole 3091 which is opposite to and communicated with the lower end of the joint air flow channel 301. The lower end of the second sealing sleeve 310 is provided with a second sealing sleeve through hole 3101, which is opposite to and communicated with the lower end of the joint first liquid flow channel 302, and a third sealing sleeve through hole 3102 which is opposite to and communicated with the lower end of the joint second liquid flow channel 303.

In a case where the joint 30 is connected to the wine dispensing mechanism 1, the lower end of the first sealing sleeve 309 abuts against the wine dispensing mechanism 1 and the first sealing sleeve through hole 3091 is opposite to the air flow channel 11. The lower end of the second sealing sleeve 310 abuts against the wine dispensing mechanism, and the second sealing sleeve through hole 3101 and the third sealing sleeve through hole 3102 are opposite to the first liquid flow channel 12 and the second liquid flow channel 13 respectively. It can be understood that it is convenient to achieving the sealed connection between the joint 30 and the wine dispensing mechanism 1 by providing the first sealing sleeve 309 and the second sealing sleeve 310.

For example, referring to FIG. 10, in a case where the joint 30 is connected to the wine dispensing mechanism 1, the lower end of the first sealing sleeve 309 and the lower end of the second sealing sleeve 310 abut against the first cover body 101.

For example, referring to FIGS. 4 and 10, an upper surface of the first cover body 101 is recessed downwards to form a cover body first groove 1011 matched with the first sealing sleeve 309 and a cover body second groove 1012 matched with the second sealing sleeve 310. In a case where the joint 30 is connected to the wine dispensing mechanism 1, the first sealing sleeve 309 is inserted in the cover body first groove 1011, and the lower end of the first sealing sleeve 309 abuts against a bottom wall of the cover body first groove 1011, and the second sealing sleeve 310 is inserted in the cover body second groove 1012, and the lower end of the second sealing sleeve 310 abuts against a bottom wall of the cover body second groove 1012.

The top of one, two or three of the joint air flow channel 301, the joint first liquid flow channel 302 and the joint second liquid flow channel 303 are located in the joint fixing portion 311. Correspondingly, the joint first connecting pipe 304, the joint second connecting pipe 305 and the joint third connecting pipe 306 are connected to a side of the joint fixing portion 311 corresponding to the joint air flow channel 301, the joint first liquid flow channel 302 and the joint second liquid flow channel 303 respectively.

### [Bracket 70]

Referring to FIG. 11, the decanting device 300 further includes a bracket 70. The bracket 70 includes a first partition plate 7041 and a second partition plate 7042, and a bracket inner cavity is defined in the bracket 70. The first partition plate 7041 and the second partition plate 7042 divide the bracket inner cavity into a first accommodating space 701, a second accommodating space 702 and a third accommodating space 703. The first accommodating space 701 and the third accommodating space 703 are disposed on two opposite sides of the second accommodating space 702.

The bracket 70 further includes a first side plate 7043 and a second side plate 7044. The first side plate 7043 and the second side plate 7044 are connected between the first partition plate 7041 and the second partition plate 7042, and are disposed oppositely on both sides (e.g., a front side and a rear side as shown in FIG. 11) of the second accommodating space 702, so as to define the second accommodating space 702 together with the first partition plate 7041 and the second partition plate 7042.

The bracket 70 further includes a top plate 7049. The top plate 7049 covers the first accommodating space 701, the second accommodating space 702 and the third accommodating space 703. The top plate 7049 is provided with a top plate first opening 70491 and a top plate second opening 70492 at positions corresponding to the first accommodating space 701 and the second accommodating space 702, respectively, so as to facilitate the installation of the wine dispensing mechanism 1, the joint 30 and the decanting device 300 in the first accommodating space 701 and the second accommodating space 702.

### [Fixing member 705]

Referring to FIG. 11, the joint 30 is connected to the bracket 70. For example, the joint 30 is located in the first accommodating space 701.

Referring to FIGS. 11 and 12, the bracket 70 further includes a third side plate 7045. The third side plate 7045 is disposed at a side (a rear side as shown in FIG. 11) of the first accommodating space 701 and is connected to the first partition plate 7041.

The bracket 70 further includes a fixing plate 7151. The fixing plate 7151 is located at a side of the third side plate 7045 proximate to the first accommodating space 701. The fixing plate 7151 is spaced apart from the third side plate 7045 to define a fixing member groove 7152. The top of the fixing member groove 7152 is open.

For example, referring to FIG. 11, the bracket 70 includes two fixing plates 7151, and the two fixing plates 7151 are cooperated with the first accommodating space 701 to define two opposite fixing member grooves 7152.

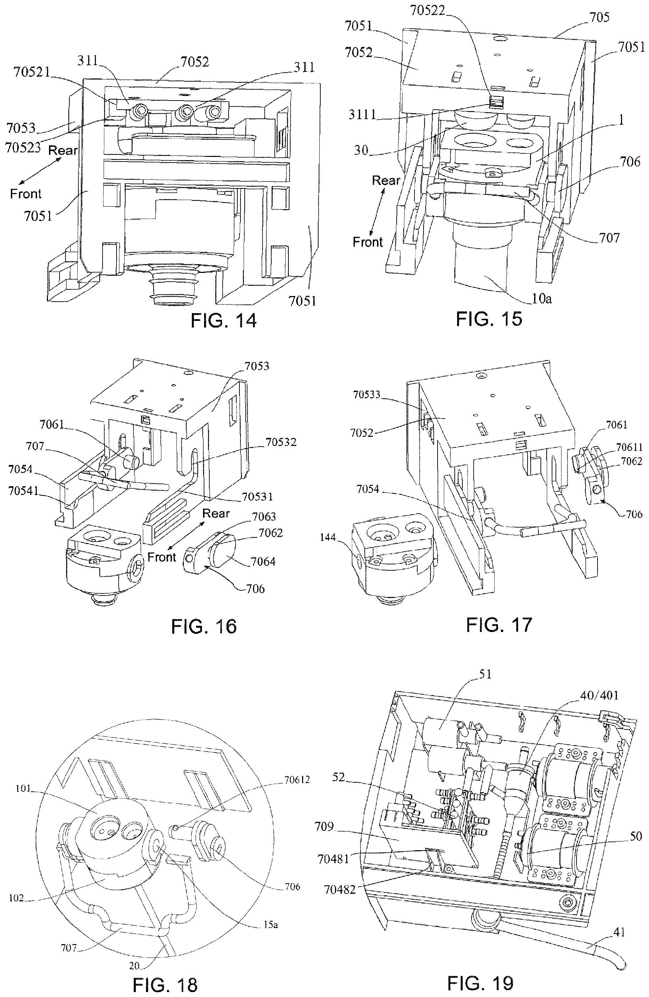

Referring to FIGS. 13 and 14, the bracket 70 further includes a fixing member 705 disposed in the first accommodating space 701. The joint 30 is fixed on the fixing member 705. The fixing member 705 includes two fixing member inserting plates 7051, a fixing member top plate 7052, and two fixing member side plates 7053 connected to a bottom of the fixing member top plate and disposed opposite to each other. The two fixing member inserting plates 7051 are connected to sides of the fixing member side plates 7053 and/or the fixing member top plate 7052, respectively.

The fixing member 705 is stably fixed on the bracket 70 by inserting the fixing member inserting plate 7051 into the fixing member groove 7152 and supported by the fixing plate 7151.

For example, the fixing plate 7151 includes a fixing bottom plate 71511 and a fixing front side plate 71512, and the fixing member inserting plate 7051 is supported by the fixing bottom plate 71511. The fixing member inserting plate 7051 is clamped between the fixing side plate 71512 and the third side plate 7045, so as to prevent the fixing member 705 from shaking in the fixing member groove 7152.

Referring to FIG. 14, the lower portion of the fixing member top plate 7052 is provided with a joint inserting groove 70521, and the joint inserting groove 70521 is opened towards the third side plate 7045. The joint inserting groove 70521 includes a lower groove wall 70523, and a portion of the lower groove wall 70523 is opened to avoid the joint first column 307 and the joint second column 308.

Referring to FIG. 15, a side of the fixing member top plate is provided with a joint clamping groove 70522 connected to the joint inserting groove, and the joint fixing portion 311 is provided with a joint buckle 3111 matched with the joint clamping groove. The joint fixing portion is inserted into the joint inserting groove and clamped with the joint clamping groove through the joint buckle, so that the joint is stably fixed on the fixing member.

### [Connecting rod 706]

Referring to FIGS. 16 and 17, the decanting device 300 further includes two connecting rods 706. The two connecting rods 706 are connected two opposite sides of the wine dispensing mechanism 1. The connecting rod 706 includes a connecting rod inserting column 7061, and the connecting rod 706 is connected to the wine dispensing mechanism 1 through the connecting rod inserting column 7061.

Referring to FIGS. 16 and 17, the connecting rod 706 further includes a connecting rod guide groove 7062 and a first connecting rod plate 7063 (i.e., a connecting rod plate). The connecting rod inserting column 7061 is disposed at a side of the first connecting rod plate 7063 proximate to the wine dispensing mechanism 1, and the connecting rod guide groove 7062 is located at a side of the first connecting rod plate 7063 away from the wine dispensing mechanism 1.

A connecting rod guide rail 70531 and a connecting rod limiting hole 70532 are defined on the fixing member side plate 7053. The connecting rod limiting hole 70532 extends through the fixing member side plate 7053 along a thickness direction of the fixing member side plate 7053, and the lower end of the connecting rod limiting hole 70532 is opened towards the front side. The connecting rod guide rail 70531 is located at the front side of the connecting rod limiting hole 70532, and the rear end of the connecting rod guide rail 70531 is connected to the lower side wall of the connecting rod limiting hole 70532. For example, the connecting rod guide rail 70531 is disposed horizontally, and the connecting rod limiting hole 70532 is a strip hole and disposed vertically.

Referring to FIGS. 15 to 17, the decanting device 300 further includes a rocking rod 707. Both ends of the rocking rod 707 are connected to the front ends (the front side as shown in FIG. 17) of the first connecting rod plates 7063 of the two connecting rods 706, respectively. The two connecting rods 706 are slidably connected to the fixing members 705. For example, the connecting rod guide rail 70531 is disposed in the connecting rod guide groove 7062, and the connecting rod guide groove 7062 is slidable relative to the connecting rod guide rail 70531. In this way, the connecting rod 706 is pushed into the connecting rod limiting hole 70532 along an extending direction of the connecting rod guide rail 70531, and the lower side wall of the connecting rod limiting hole 70532 is located in the connecting rod guide groove 7062. The rocking rod 707 is pressed downwards, and the connecting rod 706 rotates and moves upwards to drive the wine dispensing mechanism 1 to move upwards, so as to connect the joint 30 with the wine dispensing mechanism 1 and limit the connecting rod 706 in the connecting rod limiting hole 70532.

It can be understood that by providing the connecting rod guide groove 7062 and the connecting rod guide rail 70531, the connecting rod guide rail 70531 may perform a guiding function, so that the connecting rod 706 may move along the connecting rod guide rail 70531, thereby improving the stability of the movement of the connecting rod 706. The connecting rod 706 is capable of being limited in the connecting rod limiting hole 70532, and the connection between the wine dispensing mechanism 1 and the joint 30 may be implemented by providing the connecting rod guide groove 7062, the connecting rod limiting hole 70532 and the rocking rod 707.

In some embodiments, the connecting rod inserting column 7061 of one of the two connecting rods 706 is inserted into the switch installation space 15 from the switch installation open end 151 and connected to the rotating core 1423. In this way, in a case where the connecting rod 706 is rotated, the connecting rod 706 may drive the rotating core 1423 to rotate, so as to connect or disconnect the switch first air pipe 1421 and the switch second air pipe 1422, thereby connecting or disconnecting the air flow channel 11.

One of the rotating core 1423 and the connecting rod inserting column 7061 is provided with a groove, and the other is provided with an insert plate. The connecting rod 706 is capable of being rotated to drive the rotating core 1423 to rotate by inserting the insert plate into the groove.

For example, referring to FIGS. 7 and 17, the rotating core 1423 is provided with a rotating groove 14231 , and the connecting rod inserting column 7061 of the connecting rod 706 is provided with a connecting rod inserting plate 70611. By inserting the connecting rod inserting plate 70611 into the rotating groove 14231, the connecting rod 706 may drive the rotating core to rotate through the connecting rod inserting plate 70611 and the rotating groove 14231 when rotating.

Referring to FIG. 17, an opposite side of the switch installation space 15 of the wine dispensing mechanism 1 is provided with a connecting rod inserting hole 144, and the connecting rod inserting column 7061 of the other connecting rod 706 of the two connecting rods 706 is inserted into the connecting rod inserting hole 144. In a case where the rocking rod 707 is pressed downwards, the rocking rod 707 may drive the connecting rod 706 to rotate and move upwards, and drive the rotating core 1423 to rotate, so that the switch first air pipe 1421 and the switch second air pipe 1422 are connected from being disconnected.

It can be understood that the connecting rod 706 is connected to the rotating core 1423, so that the joint 30 is connected to the wine dispensing mechanism 1 and the air flow channel 11 may be turned from off to on. In this way, when the wine dispensing mechanism 1 and the joint 30 are disconnected, the air flow channel 11 is turned off, thereby preventing air from entering the wine bottle 10a. When the wine dispensing mechanism 1 and the joint 30 are connected, the air flow channel 11 is turned on, so that the gas may move in the air flow channel 11 in both directions.

The connecting rod 706 further includes a second connecting rod plate 7064 located at a side of the first connecting rod plate 7063 away from the wine dispensing mechanism 1. The second connecting rod plate 7064 is connected to the first connecting rod plate 7063 through a connecting column. In this way, the second connecting rod plate 7064, the first connecting rod plate 7063 and the connecting column together form the connecting rod guide groove 7062. The connecting rod guide groove 7062 may be a continuous circle, that is, the connecting rod guide groove 7062 is disposed around the connecting column.

The fixing member 705 further includes a connecting rod limiting plate 7054 disposed at a side of the connecting rod guide rail 70531 away from the wine dispensing mechanism 1. The connecting rod limiting plate 7054 is spaced apart from the connecting rod guide rail 70531 to form a connecting rod limiting groove 70541. The second connecting rod plate 7064 is located in the connecting rod limiting groove 70541. The connecting rod limiting groove 70541 is capable of limiting the second connecting rod plate 7064 and guiding the connecting rod 706.

In some embodiments, referring to FIG. 18, the wine dispensing mechanism 1 further includes a connecting rod installation space 15a. The connecting rod installation space 15a is defined between the first cover body 101 and the second cover body 102, and communicated with the upper air flow channel 111 and the lower air flow channel 112. The connecting rod inserting column 7061 of one of the two connecting rods 706 is inserted into the connecting rod installation space 15a. The connecting rod inserting column 7061 has a connecting rod channel 70612. The connecting rod channel 70612 extends through the connecting rod inserting column 7061 in a radial direction of the connecting rod inserting column 7061. In a case where the connecting rod inserting column 7061 is inserted into the connecting rod installation space 15a, the connecting rod channel 70612 is located in the air flow channel 11. The connecting rod inserting column 7061 of the other of the two connecting rods 706 is inserted into the connecting rod inserting hole 144.

In a case where the rocking rod 707 is pressed downward, the connecting rod 706 is driven to rotate, and two ends of the connecting rod channel 70612 are connected to the upper air flow channel 111 and the lower air flow channel 112 respectively, so as to communicate the upper air flow channel 111 and the lower air flow channel 112.

It can be understood that, based on the above arrangement, while the joint 30 and the wine dispensing mechanism 1 are connected, the air flow channel 11 may be simultaneously turned from off to on. Therefore, in a case where the joint 30 and the wine dispensing mechanism 1 are disconnected, the air flow channel 11 is turned off, so as to prevent air from entering the wine bottle, and in a case where the joint 30 and the wine dispensing mechanism 1 are connected, the air flow channel 11 is turned on, so that gas may be normally transported into the wine bottle 10a through the air flow channel 11 or gas may be extracted from the wine bottle 10a through the air flow channel 11.

Referring to FIG. 2, a side (e.g., a right side) of the first accommodating space 701 opposite to the first partition plate 7041 is provided with a display panel placement box 7081, and a side of the display panel placement box 7081 facing away from the first partition plate 7041 is opened. The decanting device 300 further includes a display panel 7082 used for display and operation, and the display panel 7082 is installed in the display panel placement box 7081 through the opening of the display panel placement box 7081.

Referring to FIG. 17, the fixing member side plate 7053 is provided with a fixing member side plate through hole 70533 for the pipeline and/or line to pass through, so as to facilitate the pipeline or line to pass through.

Referring to FIG. 11, the bracket 70 further includes a bottom plate 7048 located at the lower side of the second accommodating space. The bottom plate 7048 is connected between the first partition plate 7041 and the second partition plate 7042. And/or, the bottom plate 7048 is connected between the first side plate 7043 and the second side plate 7044.

Referring to FIGS. 19 to 21, the second accommodating space 702 is provided with an integrated box 709 therein. The integrated box 709 is fixedly connected to the bottom plate 7048. The integrated box 709 includes an integrated box vertical plate 7091. The integrated box vertical plate 7091 is clamped to the bottom plate 7048. For example, the bottom plate 7048 is provided with a bottom plate limiting protrusion 70481 and a bottom plate buckle 70482, and the integrated box vertical plate 7091 is provided with a vertical plate clamping groove 70911. The integrated box vertical plate 7091 is inserted between the bottom plate limiting protrusion 70481 and the bottom plate buckle 70482, and is clamped with the bottom plate buckle 70482 through the vertical plate clamping groove 70911.

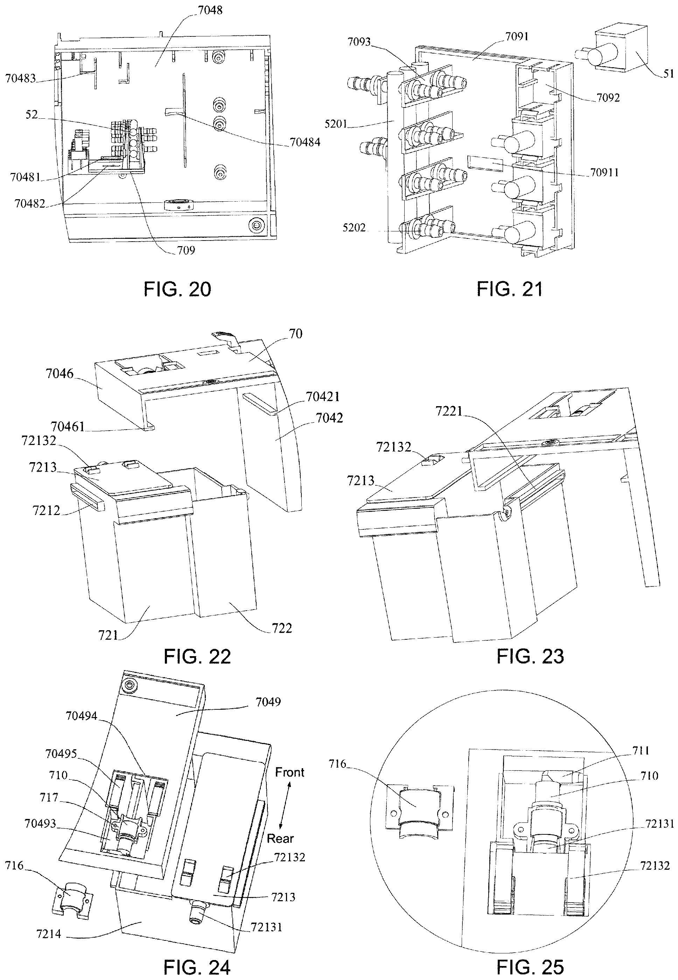

Referring to FIG. 21, the integrated box 709 further includes a valve placement groove 7092 disposed at a side of the integrated box vertical plate 7091 for fixing the valve. For example, the integrated box 709 includes a plurality of valve placement grooves 7092 arranged longitudinally. The valve 51 is placed in the valve placement groove 7092. A side wall of the valve placement groove 7092 may be provided with a valve buckle, and the valve 51 is clamped in the valve placement groove 7092 through the valve buckle.

Referring to FIG. 21, the integrated box 709 further includes a dividing member fixing plate 7093 disposed at a side of the integrated box vertical plate 7091, and the dividing member fixing plate 7093 is used to fix the dividing member 52. The dividing member fixing plate 7093 and the valve placement groove 7092 are located on the same side of the integrated box vertical plate 7091.

For example, the integrated box 709 includes a plurality of dividing member fixing plates 7093, which are arranged in at least one row. Each row of dividing member fixing plates 7093 extends in a longitudinal direction (i.e., a height direction of the bracket 70, i.e., an up-down direction as shown in FIG. 2). The dividing member fixing plate 7093 is provided with a fixing hole, and/or the top of the dividing member fixing plate 7093 is provided with a fixing notch. The dividing member 52 includes a dividing member pipe 5201 and a dividing member joint 5202 connected to a side of the dividing member pipe 5201. The dividing member joint 5202 is inserted into the fixing hole or embedded in the fixing notch to fix the dividing member 52 in the dividing member fixing plate 7093.

Referring to FIG. 20, the bottom plate 7048 further includes a valve fixing frame 70483, and the valve fixing frame 70483 is used to fix the valve 51. The valve 51 may be a solenoid valve.

Referring to FIGS. 19 to 20, the decanting device 300 further includes a gas-mixing and decanting cavity 40 and a gas increasing mechanism 401, and the gas-mixing and decanting cavity 40 and the gas increasing mechanism 401 are disposed in the second accommodating space 702. The bottom plate 7048 is further provided with a gas increasing mechanism fixing frame 70484, and the gas increasing mechanism fixing frame 70484 is adapted to a shape of the gas increasing mechanism 401. The gas-mixing and decanting cavity 40 is formed in the gas increasing mechanism 401, or the gas-mixing and decanting cavity 40 is formed in other structural members.

### [Clean water box 721 and dirty water box 722]

Referring to FIGS. 1B and 22 to 26, the decanting device 300 further includes a clean water box 721 and a dirty water box 722, and the clean water box 721 and the dirty water box 722 are disposed in the third accommodating space 703. The clean water box 721 and the dirty water box 722 are connected to the bracket 70. For example, the clean water box 721 and the dirty water box 722 are fixedly connected and then fixedly connected to the bracket 70 as a whole. The clean water box 721 and the dirty water box 722 are slidably connected to the bracket 70. For example, the clean water box 721 and the dirty water box 722 are integrally formed.

Referring to FIG. 11, the bracket 70 further includes a fourth side plate 7046 and a fifth side plate 7047. The fifth side plate 7047 is disposed at a side (the rear side as shown in FIG. 11) of the third accommodating space 703 and is connected to the second partition plate 7042. The fourth side plate 7046 is disposed at a side of the third accommodating space 703, opposite to the second partition plate 7042, and connected to the fifth side plate 7047.

Referring to FIGS. 22 and 23, a side of the clean water box 721 proximate to the fourth side plate 7046 is provided with a first sliding plate 7212, and an inner side (i.e., a side proximate to the third accommodating space 703) of the fourth side plate 7046 is provided with a first sliding support plate 70461 for supporting the first sliding plate 7212. A side of the dirty water box 722 proximate to the second partition plate 7042 is provided with a second sliding plate 7221, and a position of the second partition plate 7042 corresponding to the second sliding plate 7221 is provided with a second sliding support plate 70421 for supporting the second sliding plate 7221.

It can be understood that the first sliding plate 7212 is slidable relative to the first sliding support plate 70461, and the second sliding plate 7221 is slidable relative to the second sliding support plate 70421. Therefore, by cooperating with the first sliding plate 7212 and the first sliding support plate 70461, and the second sliding plate 7221 and the second sliding support plate 70421, the clean water box 721 and the dirty water box 722 may be slidably installed in the third accommodating space 703, so as to facilitate the assembly and disassembly of the clean water box 721 and the dirty water box 722.

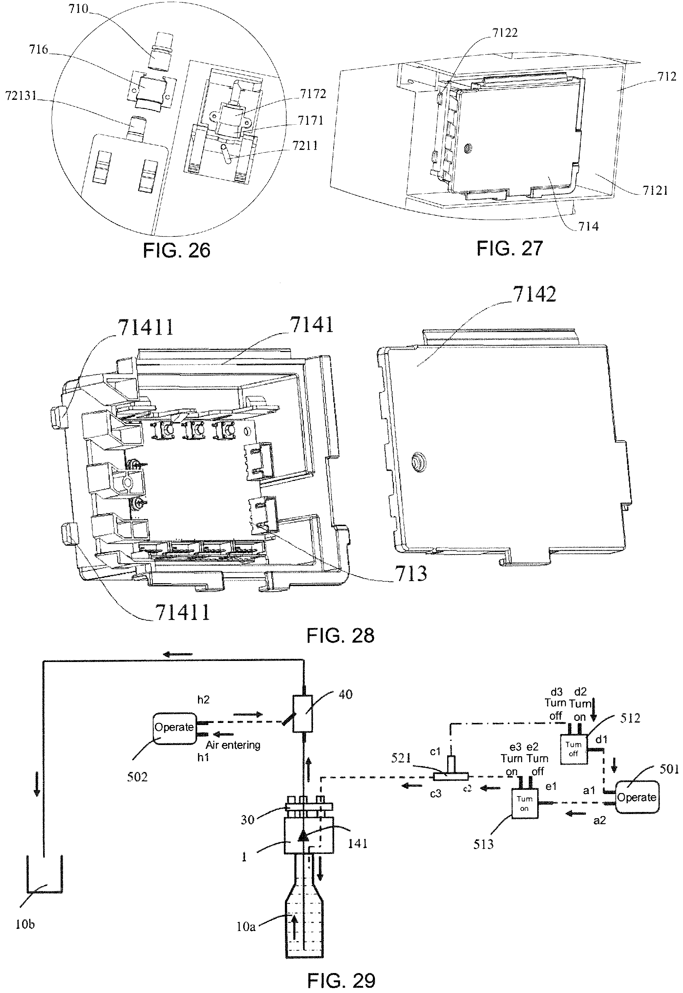

Referring to FIGS. 24 and 26, the clean water box 721 includes a clean water box body 7214 and a clean water outlet pipe 7211. An end of the clean water outlet pipe 7211 is located in the clean water box body 7214 and proximate to the bottom of the clean water box 721. Another end of the clean water outlet pipe 7211 is connected to an inlet end of the sixth valve 531 (i.e., a second one-way valve). In this way, the one end of the clean water outlet pipe 7211 is immersed in the clean water, and the residual clean water in the clean water box 721 may be reduced, which is conducive to reducing the frequency of adding water to the clean water box 721.

Referring to FIGS. 24 to 26, the clean water box 721 is a clean water sealed box. The clean water box 721 further has a clean water box cover 7213 sealed on the top of the clean water box 721. The clean water outlet pipe 7211 is formed by extending from the clean water box cover 7213 to the bottom of the clean water box 721. A side (the front side as shown in FIG. 24) of the clean water box cover 7213 is provided with a box cover connecting pipe 72131 communicated with the clean water outlet pipe 7211.

It can be understood that the clean water box 721 is configured as a clean water sealing box, which may effectively prevent pollution sources such as dust outside the clean water box 721 from entering the clean water box 721, and is conducive to maintaining the cleanliness of the clean water in the clean water box 721.

The decanting device 300 further includes a water pipe joint 710. An end of the water pipe joint 710 is sleeved on an outer periphery of the box cover connecting pipe 72131, and another end of the water pipe joint 710 is connected to a hose joint 711. A position of the top plate 7049 corresponding to the clean water box 721 is recessed downwards to form a water pipe joint placement groove 70493. A side wall of the water pipe joint placement groove 70493 proximate to the clean water box 721 is provided with an opening, and the water pipe joint 710 is fixed on a bottom wall of the water pipe joint placement groove 70493 through a water pipe joint fixing member. The box cover connecting pipe 72131 passes through the opening of the water pipe joint placement groove 70493 and is connected to the water pipe joint 710.

The bottom wall of the water pipe joint placement groove 70493 is provided with a joint connecting frame 717, and the joint connecting frame 717 is provided with a pipe placement portion 7171 for placing the box cover connecting pipe 72131 and a joint placement portion 7172 for placing the water pipe joint 710. A shape of the pipe placement portion 7171 is matched with that of the box cover connecting pipe 72131, and a shape of the joint placement portion 7172 is matched with that of the water pipe joint 710. For example, the pipe placement portion 7171 and the joint placement portion 7172 are both arc-shaped, so as to increase the contact area, which is conducive to improving the supporting and protective effects.

Referring to FIGS. 24 to 26, the decanting device 300 further includes a joint fixing frame 716. The joint fixing frame 716 clamps the connection between the box cover connecting pipe 72131 and the water pipe joint 710 between the joint fixing frame 716 and the joint connecting frame 717, thereby improving the stability of the connection between the box cover connecting pipe 72131 and the water pipe joint 710.

Referring to FIGS. 24 to 26, the top plate 7049 further includes a clean water box fixing hole 70494 and a clean water box buckle 70495. The clean water box fixing hole 70494 is located at a side of the water pipe joint placement groove 70493 proximate to the clean water box 721. The clean water box buckle 70495 is disposed at an outer side of the side wall of the water pipe joint placement groove 70493 proximate to the clean water box 721, and located in the clean water box fixing hole 70494. The top of the clean water box cover 7213 is provided with a clean water box clamping protrusion 72132 matched with the clean water box buckle 70495. After the clean water box 721 is pushed into the third accommodating space 703, the clean water box buckle 70495 is clamped with the clean water box clamping protrusion 72132.

In some embodiments, the clean water box 721 is a non-sealed box. In this case, the clean water outlet pipe 7211 is rotatably connected to the bracket 70. In a case where the clean water box 721 is not installed in the third accommodating space 703, the clean water outlet pipe 7211 is horizontally disposed. In a case where the clean water box 721 is installed in the third accommodating space 703, the clean water outlet pipe 7211 is rotated downwards and inserted into the clean water box 721, which is conducive to simplifying the piping layout of the clean water box 721 and reducing costs.

The second partition plate 7042 is provided with a partition plate through hole 70422 for the pipeline to pass through. The partition plate through hole 70422 extends upwards to the top of the second partition 7042, or the partition plate through hole 70422 extends to the top plate 7049 to facilitate the passage of pipelines.

Referring to FIGS. 27 and 28, the bracket 70 further includes a lower frame 712. The lower frame 712 extends downwards from the lower surface of the bottom plate 7048. A control box placement space 7121 is formed in the lower frame 712. The decanting device 300 further includes a control box 714, in which a control board 713 is installed. The control box 714 includes a control box body 7141 and a control box cover 7142. The control box body 7141 is formed with an inserting protrusion 71411, and the lower frame 712 is provided with an inserting groove 7122 matched with the inserting protrusion 71411. The inserting protrusion 71411 of the control box body 7141 is inserted in the inserting groove 7122, and then the control box body 7141 is fixed on the bottom plate 7048.

An opening direction of the control box body 7141 is away from the bottom plate 7048. The control board 713 is clamped in the control box body 7141. The control box cover 7142 is configured to close the opening end of the control box body 7141, so as to limit the control board 713 between the control box body 7141 and the control box cover 7142.

Referring to FIG. 2, the decanting device 300 further includes a wine dispensing pipe 41. The wine dispensing pipe 41 is configured to guide the wine in the wine bottle 10a into the wine container 10b and guide the waste liquid into the dirty water box 722.

The decanting device 300 further includes a wine dispensing pipe sleeve 421 and a wine dispensing pipe shaft sleeve 422. The wine dispensing pipe sleeve 421 is fixedly connected to the bracket 70. For example, the wine dispensing pipe sleeve 421 is fixedly connected to the second side plate 7044. An end of the wine dispensing pipe sleeve 421 is located in the second accommodating space 702, so as to facilitate to inserting the connecting hose connected to the wine dispensing pipe 41 into the wine dispensing pipe sleeve 421. Another end of the wine dispensing pipe sleeve 421 is located at a side of the second side plate 7044 away from the second accommodating space 702, and the wine dispensing pipe shaft sleeve 422 is fixedly connected to the other end of the wine dispensing pipe sleeve 421, so as to limit the end of the wine dispensing pipe 41 connected to the connecting hose in the wine dispensing pipe sleeve 421, for fixing the wine dispensing pipe 41.

The wine dispensing pipe 41 is rotatable relative to the wine dispensing pipe sleeve 421 and the wine dispensing pipe shaft sleeve 422. For example, the wine dispensing pipe 41 may be rotated to the dirty water box 722 to discharge liquid into the dirty water box 722. The wine dispensing pipe sleeve 421 and the wine dispensing pipe shaft sleeve 422 may effectively fix the wine dispensing pipe 41 and facilitate the rotation of the wine dispensing pipe 41. For example, the wine dispensing pipe sleeve 421 is connected to the wine dispensing pipe shaft sleeve 422 by threads.

### [First pump 501 and second pump 502]

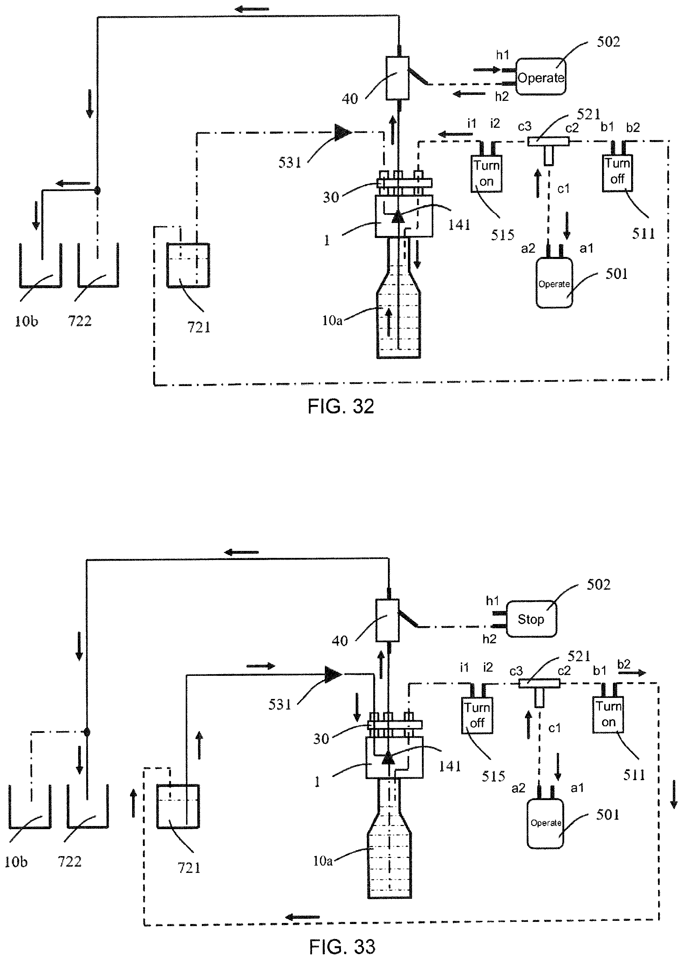

Referring to FIGS. 32 to 34, the decanting device 300 further includes a first pump 501 and a second pump 502. The first pump 501 and the second pump 502 are disposed in the second accommodating space 702. For example, the first pump 501 and the second pump 502 are disposed on the bottom plate 7048 and are fixedly connected to the bottom plate 7048. For example, the first pump 501 has a first end and a second end, and the first end and the second end of the first pump 501 are end a1 and end a2 respectively. The second pump 502 has a first end and a second end, and the first end and the second end of the second pump 502 are end h1 and end h2 respectively. For example, the first pump 501 and the second pump 502 are air pumps (e.g., vacuum pumps).

An end of the second pump 502 is communicated with the atmosphere, and another end of the second pump 502 is connected to the gas-mixing and decanting cavity 40. For example, the end h1 of the second pump 502 is communicated with the atmosphere, and the end h2 of the second pump 502 is connected to the gas-mixing and decanting cavity 40.

The gas-mixing and decanting cavity 40 is connected to the first liquid flow channel 12 and the wine dispensing pipe 41. For example, in a case where the wine dispensing mechanism 1 is connected to the joint 30, the gas-mixing and decanting cavity 40 is connected to the first liquid flow channel 12 through the joint 30. The gas-mixing and decanting cavity 40 is connected to the first liquid flow channel 12 through the joint first liquid flow channel 302. The gas-mixing and decanting cavity 40 is connected to the joint second connecting pipe 305, and the gas-mixing and decanting cavity 40 is connected to the first liquid flow channel 12 through the joint second connecting pipe 305 and the joint first liquid flow channel 302.

The valve 51 includes a first valve 511 (i.e., a fourth control valve) and a fifth valve 515 (i.e., a third control valve). The first valve 511 and the fifth valve 515 are disposed in the second accommodating space 702. For example, the first valve 511 and the fifth valve 515 are fixedly disposed in the valve placement groove 7092 or on the bottom plate 7048. The first valve 511 has a first end and a second end, and the first end and the second end of the first valve 511 are end b1 and end b2 respectively. The fifth valve 515 has a first end and a second end, and the first end and the second end of the fifth valve 515 are end i1 and end i2 respectively.

An end of the first pump 501 is communicated with the atmosphere, and another end of the first pump 501 is connected to an end of the first valve 511 and an end of the fifth valve 515. Another end of the first valve 511 is connected to the clean water box 721, and another end of the fifth valve 515 is connected to the air flow channel 11.

For example, the end a1 of the first pump 501 is communicated with the atmosphere, the end a2 of the first pump 501 is connected to the end b1 of the first valve 511 and the end i2 of the fifth valve. The end b2 of the first valve 511 is connected to the clean water box 721, and the end i1 of the fifth valve is connected to the air flow channel 11.

The dividing member includes a first dividing member 521 (i.e., the dividing member). The first dividing member 521 is disposed in the second accommodating space 702. For example, the first dividing member 521 may be fixedly disposed on the dividing member fixing plate 7093. The first dividing member 521 has a first end, a second end and a third end, and the first end, the second end and the third end of the first dividing member 521 are end c1, end c2 and end c3 respectively.

For example, the end a2 of the first pump 501 is connected to the end b1 of the first valve 511 and the end i2 of the fifth valve through the first dividing member 521. The end a2 of the first pump 501 is connected to the end c1 of the first dividing member 521, and the end c2 and the end c3 of the first dividing member 521 are connected to the end b1 of the first valve 511 and the end i2 of the fifth valve, respectively. In a case where the wine dispensing mechanism 1 is connected to the joint 30, the end i1 of the fifth valve is connected to the air flow channel 11 through the joint air flow channel 301. The end i1 of the fifth valve is connected to the joint first connecting pipe 304, and connected to the air flow channel 11 through the joint first connecting pipe 304 and the joint air flow channel 301.

The decanting device 300 further includes a sixth valve 531 (i.e., a second one-way valve). The clean water outlet pipe 7211 is connected to the second liquid flow channel 13 through the sixth valve 531. An inlet end (i.e., a second inlet end) of the sixth valve 531 is connected to the clean water outlet pipe 7211, and an outlet end (i.e., a second outlet end) of the sixth valve 531 is connected to the second liquid flow channel 13. The inlet end of the sixth valve 531 is unidirectionally communicated with the outlet end of the sixth valve 531, that is, liquid may only enter the sixth valve 531 from the inlet end of the sixth valve 531, and may only be discharged from the sixth valve 531 from the outlet end of the sixth valve 531. In this way, the clean water in the clean water box 721 may flow into the second liquid flow channel 13 through the sixth valve 531, but the liquid in the second liquid flow channel 13 may not flow into the clean water box 721.

For example, the sixth valve 531 is a one-way valve.

For example, in a case where the wine dispensing mechanism 1 is connected to the joint 30, the outlet end of the sixth valve 531 is connected to the second liquid flow channel 13 through the joint second liquid flow channel 303. The outlet end of the sixth valve 531 is connected to the joint third connecting pipe 306 of the joint and is connected to the second liquid flow channel 13 through the joint third connecting pipe 306 and the joint second liquid flow channel 303.

Referring to FIGS. 32 to 34, solid lines in the figures represent liquid paths, dashed lines represent gas paths, and dot-dash lines represent path disconnection.

Referring to FIG. 32, in a case where the decanting device 300 performs a wine dispensing operation, the first pump 501 is operated, the fifth valve 515 is turned on, the first valve 511 is turned off. Air enters the first pump 501, and then enters the wine bottle 10a through the fifth valve 515 and the air flow channel 11 in sequence, so as to increase a gas pressure above the wine in the wine bottle 10a. Due to the action of the gas pressure, the wine enters the wine suction pipe 20 from the flared section 201 of the wine suction pipe 20, and flows out from the wine dispensing pipe 41 through the first liquid flow channel 12 and the gas-mixing and decanting cavity 40 in sequence. In this case, the second pump 502 is operated simultaneously. Air enters the gas-mixing and decanting cavity 40 from the second pump 502 and is mixed with the wine in the gas-mixing and decanting cavity 40 to perform gas-mixing and decanting, so that the wine flowing out from the wine dispensing pipe 41 may be directly drunk.

In this way, the wine in the wine bottle 10a may be decanted during the dispensing process, so that the decanting time is effectively shortened, which is convenient for users to drink and improving the user experience.

For example, in a case where the decanting device 300 performs a wine dispensing operation, air enters the first pump 501, and then enters the wine bottle 10a through the first dividing member 521, the fifth valve 515, the joint first connecting pipe 304, the joint air flow channel 301 and the air flow channel 11 in sequence, so as to increase the gas pressure above the wine in the wine bottle 10a. Due to the action of the gas pressure, the wine enters the wine suction pipe 20 from the flared section 201 of the wine suction pipe 20, and flows out from the wine dispensing pipe 41 through the first liquid flow channel 12, the joint first liquid flow channel 302, the joint second connecting pipe 305 and the gas-mixing and decanting cavity 40 in sequence. In this case, the second pump 502 is operated. Air enters the gas-mixing and decanting cavity 40 from the second pump 502, and is mixed with the wine in the gas-mixing and decanting cavity 40 to perform gas-mixing and decanting, so that the wine flowing out from the wine dispensing pipe 41 may be directly drunk. The user may receive the wine through the wine container 10b, for example, the wine container 10b is a wine glass.

The decanting device 300 is further configured to perform a cleaning operation to clean the wine dispensing flow path (e.g., including the wine dispensing mechanism 1, the joint 30, the gas-mixing and decanting cavity 40 and the wine dispensing pipe 41).

Referring to FIG. 33, in a case where the decanting device 300 performs the cleaning operation, the first pump 501 is operated, the second pump is stopped, the first valve 511 is turned on, and the fifth valve 515 is turned off. Air enters the first pump 501, and then enters the clean water box 721 through the first valve 511 to increase a gas pressure above the clean water in the clean water box 721. Due to the action of the gas pressure, the clean water enters the clean water outlet pipe 7211 and flows from the clean water outlet pipe 7211 into the dirty water box 722 through the sixth valve 531, the second liquid flow channel 13, the first liquid flow channel 12, the gas-mixing and decanting cavity 40 and the wine dispensing pipe 41 in sequence, so as to complete the cleaning of the wine dispensing flow path, thereby preventing the wine from mixing with the dirty wine remaining in the wine dispensing flow path in a case where the decanting device 300 performs the wine dispensing again, which may affect the normal drinking of the wine.

For example, in a case where the decanting device 300 performs the cleaning operation, air enters the first pump 501, and then enters the clean water box 721 through the first dividing member 521 and the first valve 511 in sequence, so as to increase the gas pressure above the clean water in the clean water box 721. Due to the action of the gas pressure, the clean water enters the clean water outlet pipe 7211, and flows from the clean water outlet pipe 7211 into the dirty water box 722 through the sixth valve 531, the joint third connecting pipe 306, the joint second liquid flow channel 303, the second liquid flow channel 13, the first liquid flow channel 12, the joint first liquid flow channel 302, the joint second connecting pipe 305, the gas-mixing and decanting cavity 40 and the wine dispensing pipe 41 in sequence, so as to complete the cleaning of the wine dispensing flow path.

It can be understood that after the wine-decanting device 300 completes the wine dispensing operation, the wine will remain in the wine dispensing mechanism 1, the joint 30, the gas-mixing and decanting cavity 40 and the wine dispensing pipe 41. The residual wine is easy to deteriorate and will be mixed with fresh wine when the wine-decanting device 300 performs the next wine dispensing operation, thereby affecting the normal drinking of the wine. Therefore, by performing the cleaning operation through the decanting device 300, the wine dispensing flow path may be cleaned to prevent the residual wine in the wine dispensing flow path from contaminating the fresh wine.

The decanting device 300 is further configured to perform an emptying operation to empty the liquid (e.g., the cleaning liquid or wine) remaining in the gas-mixing and decanting cavity 40, the wine dispensing pipe, and the pipeline between the gas-mixing and decanting cavity 40 and the wine dispensing pipe.

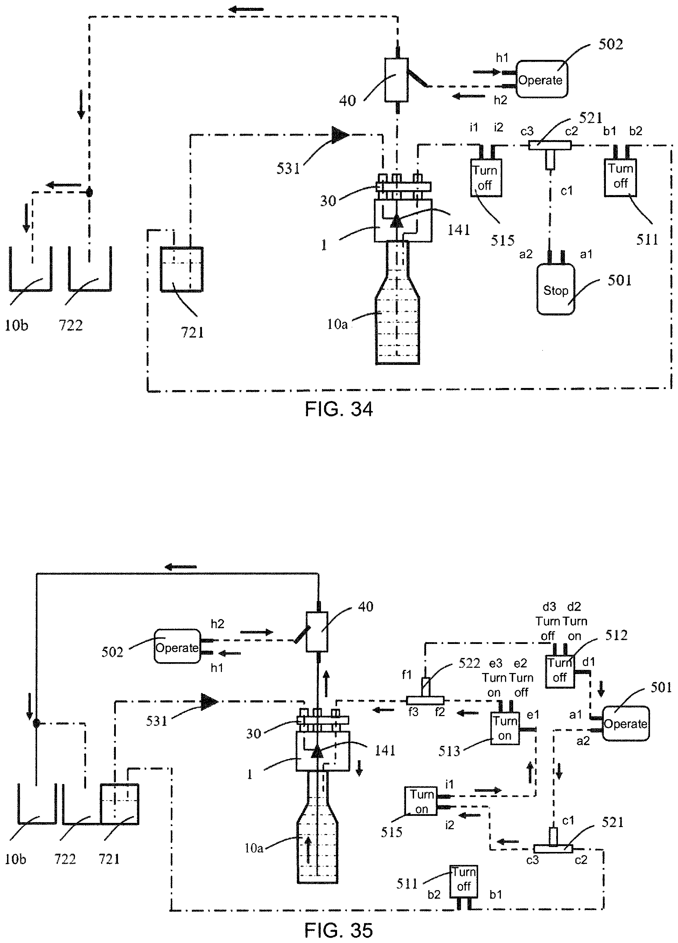

Referring to FIG. 34, in a case where the decanting device 300 performs the emptying operation, the first pump 501 is stopped, the second pump 502 is operated, the first valve 511 and the fifth valve 515 are turned off. Air enters the gas-mixing and decanting cavity 40 from the second pump 502, and then flows out through the wine dispensing pipe 41 to the wine container 10b or the dirty water box 722. During the process of the air flow, the wine or cleaning liquid remaining in the gas-mixing and decanting cavity 40, the wine dispensing pipe and the pipeline between the gas-mixing and decanting cavity 40 and the wine dispensing pipe is emptied.

It can be understood that after the decanting device 300 completes the wine dispensing operation or the cleaning operation, liquid (e.g., the water or the wine) will remain in the wine dispensing pipe. Therefore, the decanting device 300 may be used to perform the emptying operation to discharge the liquid. In a case where the wine is emptied, waste of the wine may be avoided, and the difficulty of cleaning the gas-mixing and decanting cavity 40 and the wine dispensing pipe may be reduced, thereby improving the cleanliness. In a case where the cleaning liquid is emptied, the gas-mixing and decanting cavity 40 and the wine dispensing pipe is cleaned, so as to prevent the wine dispensed from the wine bottle 10a from mixing with the cleaning liquid in a case where the decanting device 300 performs the wine dispensing operation again, thereby affecting the normal drinking of the wine.

In some embodiments, the valve 51 includes a second valve 512 (i.e., a first control valve) and a third valve 513 (i.e., a second control valve), but does not include the first valve 511 and the fifth valve 515.

Referring to FIGS. 29 to 31, the second valve 512 and the third valve 513 are disposed in the second accommodating space 702. For example, the second valve 512 and the third valve 513 are fixedly disposed in the valve placement groove 7092 or on the bottom plate 7048. The second valve 512 has a first end, a second end and a third end, and the first end, the second end and the third end of the second valve 512 are respectively an end d1, an end d2 and an end d3. The third valve 513 has a first end, a second end and a third end, and the first end, the second end and the third end of the third valve 513 are respectively an end e1, an end e2 and an end e3.

The end d2 of the second valve 512 is communicated with the atmosphere, the end d1 of the second valve 512 is connected to the end a1 of the first pump 501, the end a2 of the first pump 501 is connected to the end e1 of the third valve 513, the end e2 of the third valve 513 is communicated with the atmosphere, and the end e3 of the third valve 513 is connected to the air flow channel 11 and the end d3 of the second valve 512.

In a case where the wine dispensing mechanism 1 is connected to the joint 30, the end e3 of the third valve 513 and the end d3 of the second valve 512 are connected to the air flow channel 11 through the joint air flow channel 301.

The end e3 of the third valve 513 is connected to the air flow channel 11 and the end d3 of the second valve 512 through the first dividing member 521. The end e3 of the third valve 513 is connected to the end c2 of the first dividing member 521, the end c1 of the first dividing member 521 is connected to the end d3 of the second valve 512, and the end c3 of the first dividing member 521 is connected to the air flow channel 11 in the wine dispensing mechanism 1.

It can be understood that the end e3 of the third valve is conveniently connected to the end d3 of the second valve and the air flow channel 11 through the first dividing member 521, and the first dividing member 521 may be stably fixed through the dividing member fixing plate 7093.

For example, the end c3 of the first dividing member 521 is connected to the air flow channel 11 through the joint 30, for example, the end c3 of the first dividing member 521 is connected to the air flow channel 11 through the joint air flow channel 301. The end c3 of the first dividing member 521 is connected to the joint first connecting pipe 304, and is connected to the air flow channel 11 through the joint first connecting pipe 304 and the joint air flow channel 301.

Referring to FIGS. 29 to 31, solid lines in the figures represent liquid paths, dashed lines represent gas paths, and dot-dash lines represent path disconnection.

Referring to FIG. 29, in a case where the decanting device 300 performs the wine dispensing operation, the first pump 501 is operated, the second valve 512 is turned off, and the third valve 513 is turned on. The end d2 of the second valve is in a turn-on state, and the end d3 is in a turn-off state. The end e2 of the third valve is in a turn-off state, and the end e3 is in a turn-on state. Air enters the second valve 512, and then enters the wine bottle 10a through the first pump 501, the third valve 513 and the air flow channel 11 in sequence, so as to increase the gas pressure above the wine in the wine bottle 10a. Due to the action of the gas pressure, the wine enters the wine suction pipe 20, and flows out from the wine dispensing pipe 41 through the first liquid flow channel 12 and the gas-mixing and decanting cavity 40 in sequence. In this case, the second pump 502 is operated, and air enters the gas-mixing and decanting cavity 40 from the second pump 502 and mixes with the wine in the gas-mixing and decanting cavity 40, thereby achieving the gas-mixing and decanting while dispensing the wine.

For example, in a case where the decanting device 300 performs the wine dispensing operation, air enters the second valve 512, and then enters the wine bottle 10a through the first pump 501, the third valve 513, the first dividing member 521, the joint first connecting pipe 304, the joint air flow channel 301 and the air flow channel 11 in sequence, so as to increase the gas pressure above the wine in the wine bottle 10a. Due to the action of gas pressure, the wine enters the wine suction pipe 20 and flows out from the wine dispensing pipe 41 through the first liquid flow channel 12, the joint first liquid flow channel 302, the joint second connecting pipe 305 and the gas-mixing and decanting cavity 40 in sequence. In this case, the second pump 502 is operated, and air enters the gas-mixing and decanting cavity 40 from the second pump 502.

The decanting device 300 is further configured to perform a vacuuming operation. It can be understood that the user may not be able to drink all the wine in the wine bottle 10a at once, and the wine in the wine bottle 10a will deteriorate or taste worse after being in contact with air for a long time. Therefore, the air in the wine bottle 10a may be extracted to make the wine in the wine bottle 10a in a vacuum state, so as to extend the storage time of the wine.

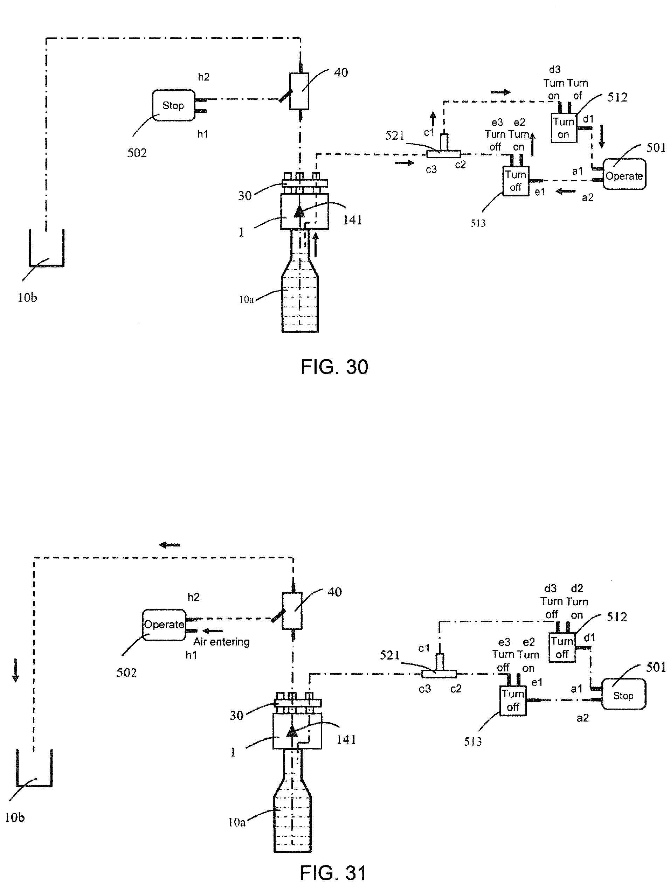

Referring to FIG. 30, in a case where the decanting device 300 performs the vacuuming operation, the first pump 501 is operated, the second pump 502 is stopped, the second valve 512 is turned on, and the third valve 513 is turned off. The end d2 of the second valve is in a turn-off state, and the end d3 of the second valve is in a turn-on state. The end e2 of the third valve is in a turn-on state, and the end e3 of the third valve is in a turn-off state. The gas in the wine bottle 10a enters the air flow channel 11, and flows to the third valve 513 from the air flow channel 11 through the second valve 512 and the first pump 501 in sequence, and is then discharged into the atmosphere by the third valve 513, so as to vacuum the wine bottle 10a and extend the storage time of the wine.

For example, in a case where the decanting device 300 performs the vacuum operation, the gas in the wine bottle 10a enters the air flow channel 11, and flows to the third valve 513 through the joint air flow channel 301, the joint first connecting pipe 304, the first dividing member 521, the second valve 512 and the first pump 501 in sequence, and is then discharged into the atmosphere by the third valve 513.

The decanting device 300 is further configured to perform the emptying operation.

Referring to FIG. 31, in a case where the decanting device 300 performs the emptying operation, the first pump 501 is stopped and the second pump 502 is operated. Air enters the gas-mixing and decanting cavity 40 from the second pump 502, and is then discharged into the wine container 10b through the wine dispensing pipe 41, thereby discharging the wine in the gas-mixing and decanting cavity 40, the wine dispensing pipe 41, and the pipeline between the gas-mixing and decanting cavity 40 and the wine dispensing pipe 41 into the wine container 10b.

In some embodiments, the valve 51 includes the first valve 511, the second valve 512, the third valve 513, and the fifth valve 515.

Referring to FIGS. 35 to 38, the second valve 512 and the third valve 513 are disposed in the second accommodating space 702. For example, the second valve 512 and the third valve 513 are fixedly disposed in the valve placement groove 7092 or on the bottom plate 7048. The second valve 512 has a first end, a second end and a third end, and the first end, the second end and the third end of the second valve 512 are respectively an end d1, an end d2 and an end d3. The third valve 513 has a first end, a second end and a third end, and the first end, the second end and the third end of the third valve 513 are respectively an end e1, an end e2 and an end e3.

The end d2 of the second valve 512 is communicated with the atmosphere, and the end d1 of the second valve 512 is connected to the end a1 of the first pump 501. The end a2 of the first pump 501 is connected to the end b1 of the first valve 511 and the end i2 of the fifth valve 515. The end i1 of the fifth valve 515 is connected to the end e1 of the third valve 513. The end e2 of the third valve 513 is communicated with the atmosphere. The end e3 of the third valve 513 is connected to the end d3 of the second valve 512 and the air flow channel 11. The end b2 of the first valve 511 is connected to the clean water box 721.

For example, the end a2 of the first pump 501 is connected to the end b1 of the first valve 511 and the end i2 of the fifth valve 515 through the first dividing member 521. For example, the end a2 of the first pump 501 is connected to the end c1 of the first dividing member 521, the end c2 of the first dividing member 521 is connected to the end b1 of the first valve 511, and the end c3 of the first dividing member 521 is connected to the end i2 of the fifth valve 515.

The dividing member 52 further includes a second dividing member 522. The second dividing member 522 is disposed in the second accommodating space 702. For example, the second dividing member 522 is fixedly disposed on the dividing member fixing plate 7093. The second dividing member 522 has a first end, a second end and a third end, and the first end, the second end and the third end of the second dividing member 522 are end f1, end f2 and end f3 respectively.

The end e3 of the third valve 513 is connected to the end d3 of the second valve 512 and the air flow channel 11 through the second dividing member 522. For example, the end e3 of the third valve 513 is connected to the end f2 of the second dividing member 522, the end f1 of the second dividing member 522 is connected to the end d3 of the second valve 512, and the end f3 of the second dividing member 522 is connected to the air flow channel 11.

In a case where the wine dispensing mechanism 1 is connected to the joint 30, the end f3 of the second dividing member 522 is connected to the air flow channel 11 through the joint air flow channel 301. The end f3 of the second dividing member 522 is connected to the joint first connecting pipe 304, and is connected to the air flow channel 11 through the joint first connecting pipe 304 and the joint air flow channel 301.

Referring to FIGS. 35 to 38, solid lines in the figures represent liquid paths, dashed lines represent gas paths, and dot-dash lines represent path disconnection.

Referring to FIG. 35, in a case where the decanting device 300 performs the wine dispensing operation, the first pump 501 is operated, the first valve 511 and the second valve 512 are turned off, the third valve 513 and the fifth valve 515 are turned on, the end d2 of the second valve 512 is in a turn-on state, and the end d3 of the second valve 512 is in a turn-off state. The end e2 of the third valve 513 is in a turn-off state, and the end e3 of the third valve 513 is in a turn-on state.

Air enters the second valve 512 and flows into the wine bottle 10a through the first pump 501, the fifth valve 515, the third valve 513 and the air flow channel 11 in sequence, so as to increase the gas pressure above the wine in the wine bottle 10a. Due to the action of gas pressure, the wine enters the wine suction pipe 20, flows to the wine dispensing pipe 41 from the wine suction pipe 20 through the first liquid flow channel 12 and the gas-mixing and decanting cavity 40 in sequence, and then flows out from the wine dispensing pipe 41 to the wine container 10b. In this case, the second pump 502 is operated, and air enters the gas-mixing and decanting cavity 40 from the second pump 502 and mixes with the wine in the gas-mixing and decanting cavity 40, so as to achieve the gas-mixing and decanting while dispensing the wine.

For example, in a case where the decanting device 300 performs the wine dispensing operation, air enters the second valve 512 and flows into the wine bottle 10a through the first pump 501, the first dividing member 521, the fifth valve 515, the third valve 513, the second dividing member 522, the joint first connecting pipe 304, the joint air flow channel 301 and the air flow channel 11 in sequence, so as to increase the gas pressure above the wine in the wine bottle 10a. Due to the action of the gas pressure, the wine enters the wine suction pipe 20 and flows to the wine dispensing pipe 41 through the first liquid flow channel 12, the joint first liquid flow channel 302, the joint second connecting pipe 305 and the gas-mixing and decanting cavity 40 in sequence, and then flows out from the wine dispensing pipe 41. In this case, the second pump 502 is operated, and air enters the gas-mixing and decanting cavity 40 from the second pump 502.

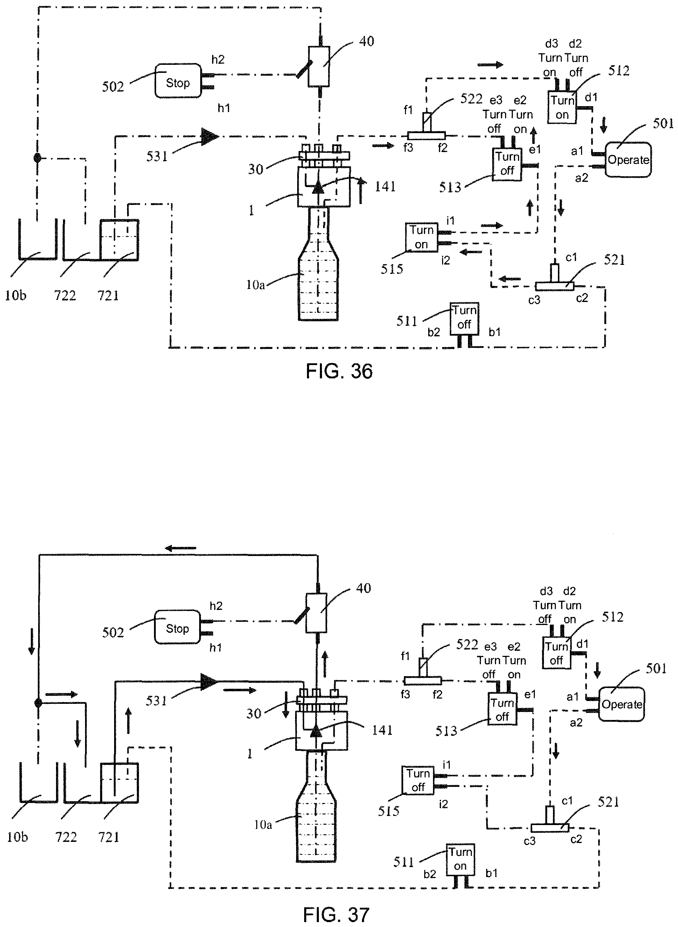

The decanting device 300 is further configured to perform the vacuuming operation. Referring to FIG. 36, in a case where the decanting device 300 performs a vacuuming operation, the second pump 502 is stopped, the first pump 501 is operated, the second valve 512 and the fifth valve 515 are turned on, and the first valve 511 and the third valve 513 are turned off. The end d2 of the second valve 512 is in a turn-off state, and the end d3 of the second valve 512 is in a turn-on state. The end e2 of the third valve 513 is in a turn-on state, and the end e3 of the third valve 513 is in a turn-off state. The gas in the wine bottle 10a enters the air flow channel 11, and flows to the third valve through the second valve, the first pump and the fifth valve in sequence, and is then discharged into the atmosphere through the third valve 513, so as to vacuum the wine bottle 10a and extend the storage time of the wine.

For example, in a case where the decanting device 300 performs the vacuum operation, the gas in the wine bottle 10a enters the air flow channel 11, and flows to the third valve through the joint air flow channel 301, the joint first connecting pipe 304, the second dividing member 522, the second valve, the first pump, the first dividing member 521 and the fifth valve in sequence, and then is discharged into the atmosphere through the third valve 513.

The decanting device 300 is further configured to perform the cleaning operation.

Referring to FIG. 37, in a case where the decanting device 300 performs the cleaning operation, the first pump 501 is operated, and the second pump 502 is stopped, the first valve 511 is turned on, and the second valve 512, the third valve 513 and the fifth valve 515 are turned off. The end d2 of the second valve 512 is in a turn-on state, and the end d3 of the second valve is in a turn-off state. The end e2 of the third valve 513 is in a turn-on state, and the end e3 of the third valve 513 is in a turn-off state.

Air enters the second valve 512, and then enters the clean water box 721 through the first pump 501 and the first valve 511 in sequence, so as to increase the gas pressure above the clean water in the clean water box 721. Due to the action of the gas pressure, the clean water enters the clean water outlet pipe 7211, and then enters the dirty water box 722 from the clean water outlet pipe 7211 through the sixth valve 531, the second liquid flow channel 13, the first liquid flow channel 12, the gas-mixing and decanting cavity 40 and the wine dispensing pipe 41 in sequence, so as to complete the cleaning of the wine dispensing flow path.

For example, in a case where the decanting device 300 performs the cleaning operation, air enters the second valve 512, and then enters the clean water box 721 through the first pump 501, the first dividing member 521, and the first valve 511 in sequence, so as to increase the gas pressure above the clean water in the clean water box 721. Due to the action of the gas pressure, the clean water enters the clean water outlet pipe 7211, and then enters the dirty water box 722 from the clean water outlet pipe 7211 through the sixth valve 531, the joint third connecting pipe 306, the joint second liquid flow channel 303, the second liquid flow channel 13, the first liquid flow channel 12, the joint first liquid flow channel 302, the joint second connecting pipe, the gas-mixing and decanting cavity 40 and the wine dispensing pipe 41 in sequence.

The decanting device 300 is further configured to perform the emptying operation.

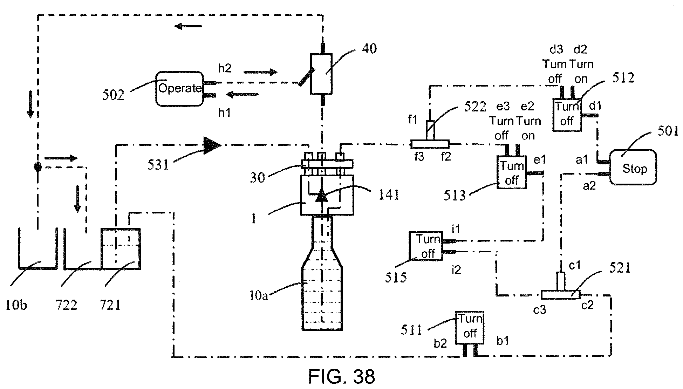

Referring to FIG. 38, in a case where the decanting device 300 performs the emptying operation, the first pump 501 is stopped, the second pump 502 is operated, and the first valve 511, the second valve 512, the third valve 513 and the fifth valve 515 are turned off. The end d2 of the second valve 512 is in a turn-on state, and the end d3 of the second valve 512 is in a turn-off state. The end e2 of the third valve 513 is in a turn-on state, and the end e3 of the third valve 513 is in a turn-off state.

After the air enters the gas-mixing and decanting cavity 40 from the second pump 502, the air enters the wine dispensing pipe 41 from the gas-mixing and decanting cavity 40 and is discharged from the wine dispensing pipe 41. For example, the wine may be discharged from the wine dispensing pipe 41 to the dirty water box 722 or the wine container 10b. The flow of air will drive the residual wine or cleaning liquid in the gas-mixing and decanting cavity 40, the wine dispensing pipe and the pipeline between the gas-mixing and decanting cavity 40 and the wine dispensing pipe 41 to be discharged.

## Claims

1. A refrigeration apparatus comprising:
a cabinet defining a storage compartment; and
a decanting device disposed in the storage compartment; an accommodating space for placing a wine bottle being defined in the decanting device; the wine bottle including a mouth, a bottle bottom and an inner cavity; the decanting device being configured to extract wine from the wine bottle, inject air into the extracted wine to decant the wine, and extract air from the wine bottle; the decanting device including:
a wine dispensing mechanism connected to the mouth and configured to transport the wine in the wine bottle to outside of the wine bottle; the wine dispensing mechanism including:
an air flow channel communicated with the inner cavity;
a first liquid flow channel; and
a wine suction pipe, an end of the wine suction pipe being communicated with the first liquid flow channel, and another end of the wine suction pipe being located in the inner cavity and proximate to the bottle bottom;
a first one-way valve disposed in the first liquid flow channel; the first one-way valve including a first inlet end and a first outlet end, and the first inlet end being closer to an end of the first liquid flow channel communicated with the wine suction pipe than the first outlet end;
a first control valve, a second end of the first control valve being communicated with the atmosphere, and a third end of the first control valve being connected to the air flow channel;
a second control valve, a second end of the second control valve being communicated with the atmosphere, and a third end of the second control valve being connected to the third end of the first control valve and the air flow channel;
a first pump, a first end of the first pump being connected to a first end of the first control valve, and a second end of the first pump being connected to a first end of the second control valve;
a second pump, and a first end of the second pump being communicated with the atmosphere;
a gas-mixing and decanting cavity connected to a second end of the second pump and the first liquid flow channel; and
a wine dispensing pipe communicated with the gas-mixing and decanting cavity;
wherein, when the wine is dispensed, the second end of the first control valve is turned on, and the third end of the first control valve is turned off; the second end of the second control valve is turned off, and the third end of the second control valve is turned on; the first pump is operated, so that air enters the first control valve, and flows into the wine bottle through the first pump, the second control valve and the air flow channel, so as to increase a gas pressure above the wine in the wine bottle; due to an action of the gas pressure, the wine enters the wine suction pipe, and flows out from the wine dispensing pipe through the first liquid flow channel and the gas-mixing and decanting cavity; and, the second pump is operated, so that the air enters the gas-mixing and decanting cavity from the second pump, and mixes with the wine in the gas-mixing and decanting cavity, so as to achieve gas-mixing and decanting;
when vacuuming is performed, the second pump is stopped, the second end of the first control valve is turned off, and the third end of the first control valve is turned on; the second end of the second control valve is turned on, and the third end of the second control valve is turned off; the first pump is operated, so that the air in the wine bottle enters the air flow channel, flows to the second control valve through the first control valve and the first pump, and is discharged into the atmosphere from the second control valve.

2. The refrigeration apparatus according to claim 1, wherein the decanting device further includes a joint, the joint is detachably connected to the wine dispensing mechanism; the joint defines a joint air flow channel and a joint first liquid flow channel therein;
in a case where the joint is connected to the wine dispensing mechanism, the joint air flow channel corresponds to the air flow channel and is connected to the air flow channel, and the joint first liquid flow channel corresponds to the first liquid flow channel and is connected to the first liquid flow channel; the third end of the second control valve and the third end of the first control valve are connected to the air flow channel through the joint air flow channel, and the gas-mixing and decanting cavity is connected to the first liquid flow channel through the joint first liquid flow channel.

3. The refrigeration apparatus according to claim 1 or 2, wherein the decanting device further includes:
a joint;
a connecting rod connected to the wine dispensing mechanism, and including a connecting rod guide groove;
a fixing member connected to the joint, and including:
a fixing member top plate; and
a fixing member side plate connected to the fixing member top plate and located below the fixing member top plate; the fixing member side plate including:
a connecting rod guide rail matched with the connecting rod guide groove, so that the connecting rod is slidable relative to the connecting rod guide rail; and
a connecting rod limiting hole located at an end of the connecting rod guide rail and at a side of the connecting rod guide rail proximate to the fixing member top plate; a side of the connecting rod limiting hole facing towards the connecting rod guide rail being opened; and
a rocking rod connected to the connecting rod;
wherein, in a case where the connecting rod slides along the connecting rod guide rail to the end of the connecting rod guide rail, by pressing the rocking rod, the connecting rod is moved towards a direction proximate to the fixing portion top plate into the connecting rod limiting hole while rotating, and the wine dispensing mechanism moves towards the direction proximate to the fixing portion top plate due to an action of the connecting rod to connect the joint.

4. The refrigeration apparatus according to claim 3, wherein the decanting device includes:
two connecting rods connected to two opposite sides of the wine dispensing mechanism respectively, and the connecting rod includes:
a connecting rod plate, and the connecting rod guide groove being disposed on a side of the connecting rod plate away from the wine dispensing mechanism; and
a connecting rod inserting column disposed at an end of the connecting rod plate and located at a side of the connecting rod plate proximate to the wine dispensing mechanism; the connecting rod inserting column being inserted in the wine dispensing mechanism;
the fixing member includes two fixing member side plates, and the two fixing member side plates are disposed opposite to each other;
wherein two ends of the rocking rod are connected to other ends of the two connecting rod plates, respectively.

5. The refrigeration apparatus according to claim 4, wherein the wine dispensing mechanism includes:
a first cover body;
a second cover body connected to the first cover body, and including a first column; wherein the first column extends in a direction away from the first cover body and is inserted into the mouth of the wine bottle; ends of the air flow channel and the first liquid flow channel being communicated with the inner cavity of the wine bottle are defined in the first column; and
a mouth sealing sleeve disposed on an outer periphery of the first column and located between the first column and the wine bottle.

6. The refrigeration apparatus according to claim 5, wherein the air flow channel includes a first air flow sub-channel defined in the first cover body and a second air flow sub-channel defined in the second cover body;
the wine dispensing mechanism further includes:
a switch installation space defined between the first cover body and the second cover body and communicated with the first air flow sub-channel and the second air flow sub-channel; and
a switch disposed in the switch installation space and configured to connect or disconnect the first air flow sub-channel and the second air flow sub-channel.

7. The refrigeration apparatus according to claim 6, wherein the wine dispensing mechanism further includes a connecting rod inserting hole; the connecting rod inserting hole is disposed in the second cover body and disposed opposite to the switch installation space;
the switch installation space has a switch installation opening facing towards a side of the wine dispensing mechanism;
a connecting rod inserting column of one of the two connecting rods is inserted into the switch installation space from the switch installation open end and connected to the switch;
a connecting rod inserting column of another of the two connecting rods is inserted into the connecting rod inserting hole;
in a case where the rocking rod is pressed, the connecting rod rotates and moves towards the fixing member top plate to drive the switch to rotate, so that the switch first air pipe is communicated with the switch second air pipe.

8. A refrigeration apparatus comprising:
a cabinet defining a storage compartment; and
a decanting device disposed in the storage compartment; an accommodating space for placing a wine bottle being defined in the decanting device; the wine bottle including a mouth, a bottle bottom and an inner cavity; the decanting device being configured to extract wine from the wine bottle, and inject air into the extracted wine to decant the wine; the decanting device including:
a wine dispensing mechanism connected to the mouth and configured to transport the wine in the wine bottle to outside of the wine bottle; the wine dispensing mechanism including:
an air flow channel communicated with the inner cavity;
a first liquid flow channel;
a second liquid flow channel; and
a wine suction pipe, an end of the wine suction pipe being communicated with the first liquid flow channel, and another end of the wine suction pipe being located in the inner cavity and proximate to the bottle bottom;
a first one-way valve disposed in the first liquid flow channel; the first one-way valve including a first inlet end and a first outlet end, and the first inlet end being closer to an end of the first liquid flow channel communicated with the wine suction pipe than the first outlet end; the second liquid flow channel being bidirectionally communicated with the first outlet end, and the second liquid flow channel being unidirectionally communicated with the first inlet end, so as to prevent liquid in the second liquid flow channel from entering the wine bottle through the first one-way valve;
a first pump, and a first end of the first pump being communicated with the atmosphere;
a third control valve, a first end of the third control valve being connected to the air flow channel, and a second end of the third control valve being connected to the second end of the first pump;
a fourth control valve, and a first end of the fourth control valve being connected to the second end of the third control valve and the second end of the first pump;
a second pump, and a first end of the second pump being communicated with the atmosphere;
a gas-mixing and decanting cavity connected to a second end of the second pump and the first liquid flow channel;
a wine dispensing pipe communicated with the gas-mixing and decanting cavity;
a second one-way valve including a second inlet end and a second outlet end;
the second outlet end being connected to the second liquid flow channel;
a clean water sealing box including:
a clean water box body connected to a second end of the fourth control valve; and
a clean water outlet pipe, an end of the clean water outlet pipe being located in the clean water box body and proximate to a bottom of the clean water sealing box, and another end of the clean water outlet pipe being connected to the second inlet end; and
a dirty water box connected to the wine dispensing pipe;
wherein, when the wine is dispensed, the fourth control valve is turned off, and the third control valve is turned on; the first pump is operated, so that air enters the first pump, and flows into the wine bottle through the third control valve and the air flow channel, so as to increase a gas pressure above wine in the wine bottle; due to an action of the gas pressure, the wine enters the wine suction pipe and flows out from the wine dispensing pipe through the first liquid flow channel and the gas-mixing and decanting cavity; and, the second pump is operated, so that air enters the gas-mixing and decanting cavity from the second pump, and is mixed with the wine in the gas-mixing and decanting cavity, so as to achieve gas-mixing and decanting;
the decanting device is further configured to clean the wine dispensing mechanism, the gas-mixing and decanting cavity and the wine dispensing pipe; when cleaning is performed, the fourth control valve is turned on and the third control valve is turned off; the first pump is operated and the second pump is stopped, so that air enters the first pump and enters the clean water sealing box through the fourth control valve, so as to increase a gas pressure above the clean water in the clean water sealing box; due to an action of the gas pressure, the clean water enters the clean water outlet pipe, flows to the wine dispensing pipe after flowing through the second one-way valve, the second liquid flow channel, the first liquid flow channel and the gas-mixing and decanting cavity, and is discharged from the wine dispensing pipe to the dirty water box.

9. The refrigeration apparatus according to claim 8, the decanting device further includes a joint, the joint is detachably connected to the wine dispensing mechanism; the joint defines a joint air flow channel, a joint first liquid flow channel and a joint second liquid flow channel therein;
in a case where the joint is connected with the wine dispensing mechanism, the joint air flow channel corresponds to the air flow channel and is connected to the air flow channel, the joint first liquid flow channel corresponds to the first liquid flow channel and is connected to the first liquid flow channel, and the joint second liquid flow channel corresponds to the second liquid flow channel and is connected to the second liquid flow channel; the first end of the third control valve is connected to the air flow channel through the joint air flow channel, the gas-mixing and sobering chamber is connected to the first liquid flow channel through the joint first liquid flow channel, and the second one-way valve is connected to the second liquid flow channel through the joint second liquid flow channel.

10. The refrigeration apparatus according to claim 8, wherein the first one-way valve includes a housing, and a side of the housing is provided with a valve opening; the second liquid flow channel is communicated with the valve opening; the valve opening is bidirectionally communicated with the first outlet end, and the valve opening is unidirectionally communicated with the first inlet end, so as to prevent liquid in the valve opening from entering the wine bottle through the first one-way valve.

11. The refrigeration apparatus according to any one of claims 8 to 10, wherein the decanting device further includes:
a joint;
a connecting rod connected to the wine dispensing mechanism, and including a connecting rod guide groove;
a fixing member connected to the joint, and including:
a fixing member top plate; and
a fixing member side plate connected to the fixing member top plate and located below the fixing member top plate; the fixing member side plate including:
a connecting rod guide rail matched with the connecting rod guide groove, so that the connecting rod is slidable relative to the connecting rod guide rail; and
a connecting rod limiting hole located at an end of the connecting rod guide rail and at a side of the connecting rod guide rail proximate to the fixing member top plate; a side of the connecting rod limiting hole facing towards the connecting
rod guide rail being opened; and
a rocking rod connected to the connecting rod;
wherein, in a case where the connecting rod slides along the connecting rod guide rail to the end of the connecting rod guide rail, by pressing the rocking rod, the connecting rod is moved towards a direction proximate to the fixing portion top plate into the connecting rod limiting hole while rotating, and the wine dispensing mechanism moves towards the direction proximate to the fixing portion top plate due to an action of the connecting rod to connect the joint.

12. The refrigeration apparatus according to claim 11, wherein the decanting device includes:
two connecting rods connected to two opposite sides of the wine dispensing mechanism respectively, and the connecting rod includes:
a connecting rod plate, and the connecting rod guide groove being disposed on a side of the connecting rod plate away from the wine dispensing mechanism; and
a connecting rod inserting column disposed at an end of the connecting rod plate and located at a side of the connecting rod plate proximate to the wine dispensing mechanism; the connecting rod inserting column being inserted in the wine dispensing mechanism;
the fixing member includes two fixing member side plates, and the two fixing member side plates are disposed opposite to each other;
wherein two ends of the rocking rod are connected to other ends of the two connecting rod plates, respectively.

13. A refrigeration apparatus comprising:
a cabinet defining a storage compartment; and
a decanting device disposed in the storage compartment; an accommodating space for placing a wine bottle being defined in the decanting device; the wine bottle including a mouth, a bottle bottom and an inner cavity; the decanting device being configured to extract wine from the wine bottle, and inject air into the extracted wine to decant the wine; the decanting device including:
a wine dispensing mechanism connected to the mouth and configured to transport the wine in the wine bottle to outside of the wine bottle; the wine dispensing mechanism including:
an air flow channel communicated with the inner cavity;
a first liquid flow channel;
a second liquid flow channel; and
a wine suction pipe, an end of the wine suction pipe being communicated with the first liquid flow channel, and another end of the wine suction pipe being located in the inner cavity and proximate to the bottle bottom;
a first one-way valve disposed in the first liquid flow channel; the first one-way valve including a first inlet end and a first outlet end, and the first inlet end being closer to an end of the first liquid flow channel communicated with the wine suction pipe than the first outlet end; the second liquid flow channel being bidirectionally communicated with the first outlet end, and the second liquid flow channel being unidirectionally communicated with the first inlet end, so as to prevent liquid in the second liquid flow channel from entering the wine bottle through the first one-way valve;
a first control valve, a second end of the first control valve being communicated with the atmosphere, and a third end of the first control valve being connected to the air flow channel;
a second control valve, a second end of the second control valve being communicated with the atmosphere, and a third end of the second control valve being connected to the third end of the first control valve and the air flow channel;
a first pump, and a first end of the first pump being connected to a first end of the first control valve;
a third control valve, a first end of the third control valve being connected to a first end of the second control valve, and a second end of the third control valve being connected to a second end of the first pump;
a second one-way valve including a second inlet end and a second outlet end;
the second outlet end being connected to the second liquid flow channel;
a clean water sealing box, including:
a clean water box body; and
a clean water outlet pipe, an end of the clean water outlet pipe being located in the clean water box body and proximate to a bottom of the clean water sealing box, and another end of the clean water outlet pipe being connected to the second inlet end; and
a dirty water box connected to the wine dispensing pipe;
a fourth control valve, a first end of the fourth control valve being connected to the second end of the third control valve and the second end of the first pump, and a second end of the fourth control valve being connected to the clean water box body;
a second pump, a first end of the second pump being communicated with the atmosphere; and
a gas-mixing and decanting cavity connected to a second end of the second pump and the first liquid flow channel;
wherein, when the wine is dispensed, the fourth control valve is turned off and the fifth valve is turned on; the second end of the first control valve is turned on and the third end of the first control valve is turned off; the second end of the second control valve is turned off and the third end of the second control valve is turned on; the first pump is operated, so that air enters the first control valve, and flows into the wine bottle through the first pump, the third control valve, the second control valve and the air flow channel, so as to increase a gas pressure above the wine in the wine bottle; due to an action of the gas pressure, the wine enters the wine suction pipe and flows out from the wine dispensing pipe through the first liquid flow channel and the gas-mixing and decanting cavity; and, the second pump is operated, so that air enters the gas-mixing and decanting cavity from the second pump, and is mixed with the wine in the gas-mixing and decanting cavity, so as to achieve gas-mixing and decanting;
the decanting device is further configured to extract air from the wine bottle; when vacuuming is performed, the fourth control valve is turned off and the fifth valve is turned on; the second end of the first control valve is in a turn-off state, and the third end of the first control valve is in a turn-on state; the second end of the second control valve is in a turn-on state, and the third end of the second control valve is in a turn-off state; the first pump is operated, and the second pump is stopped, so that air in the wine bottle enters the air flow channel, flows to the second control valve through the first control valve, the first pump, the third control valve, and is discharged to the atmosphere from the second control valve;
the decanting device is further configured to clean the wine dispensing mechanism, the gas-mixing and decanting cavity and the wine dispensing pipe; during cleaning is performed, the fourth control valve is turned on, and the second control valve and the third control valve are turned off; the second end of the first control valve is in a turn-on state, and the third end of the first control valve is in a turn-off state; the first pump is operated, and the second pump is stopped, so that air enters the first control valve, and flows into the clean water box through the first pump and the fourth control valve, so as to increase a gas pressure above the clean water in the clean water box; due to an action of the gas pressure, the clean water enters the clean water outlet pipe, flows to the wine dispensing pipe through the second one-way valve, the second liquid flow channel, the first liquid flow channel and the gas-mixing and decanting cavity, and is discharged from the wine dispensing pipe.

14. The refrigeration apparatus according to claim 13, wherein the decanting device further includes a joint, the joint is detachably connected to the wine dispensing mechanism; the joint defines a joint air flow channel, a joint first liquid flow channel and a joint second liquid flow channel therein;
in a case where the joint is connected with the wine dispensing mechanism, the joint air flow channel corresponds to the air flow channel and is connected to the air flow channel, the joint first liquid flow channel corresponds to the first liquid flow channel and is connected to the first liquid flow channel, and the joint second liquid flow channel corresponds to the second liquid flow channel and is connected to the second liquid flow channel; the third end of the first control valve and the third end of the second control valve are connected to the air flow channel through the joint air flow channel, the gas-mixing and decanting cavity is connected to the first liquid flow channel through the joint first liquid flow channel, and the second outlet end is connected to the second liquid flow channel through the joint second liquid flow channel.

15. The refrigeration apparatus according to claim 13, wherein the first one-way valve includes a housing, and a side of the housing is provided with a valve opening; the second liquid flow channel is communicated with the valve opening; the valve opening is bidirectionally communicated with the first outlet end, and the valve opening is unidirectionally communicated with the first inlet end, so as to prevent liquid in the valve opening from entering the wine bottle through the first one-way valve.

16. The refrigeration apparatus according to any one of claims 13 to 15, wherein the decanting device further includes:
a joint;
a connecting rod connected to the wine dispensing mechanism, and including a connecting rod guide groove;
a fixing member connected to the joint, and including:
a fixing member top plate; and
a fixing member side plate connected to the fixing member top plate and located below the fixing member top plate; the fixing member side plate including:
a connecting rod guide rail matched with the connecting rod guide groove, so that the connecting rod is slidable relative to the connecting rod guide rail; and
a connecting rod limiting hole located at an end of the connecting rod guide rail and at a side of the connecting rod guide rail proximate to the fixing member top plate; a side of the connecting rod limiting hole facing towards the connecting rod guide rail being opened; and
a rocking rod connected to the connecting rod;
wherein, in a case where the connecting rod slides along the connecting rod guide rail to the end of the connecting rod guide rail, by pressing the rocking rod, the connecting rod is moved towards a direction proximate to the fixing portion top plate into the connecting rod limiting hole while rotating, and the wine dispensing mechanism moves towards the direction proximate to the fixing portion top plate due to an action of the connecting rod to connect the joint.

17. The refrigeration apparatus according to claim 16, wherein the decanting device includes:
two connecting rods connected to two opposite sides of the wine dispensing mechanism respectively, and the connecting rod includes:
a connecting rod plate, and the connecting rod guide groove being disposed on a side of the connecting rod plate away from the wine dispensing mechanism; and
a connecting rod inserting column disposed at an end of the connecting rod plate and located at a side of the connecting rod plate proximate to the wine dispensing mechanism; the connecting rod inserting column being inserted in the wine dispensing mechanism;
the fixing member includes two fixing member side plates, and the two fixing member side plates are disposed opposite to each other;
wherein two ends of the rocking rod are connected to other ends of the two connecting rod plates, respectively.

18. The refrigeration apparatus according to claim 17, wherein the wine dispensing mechanism includes:
a first cover body;
a second cover body connected to the first cover body, and including a first column; wherein the first column extends in a direction away from the first cover body and is inserted into the mouth of the wine bottle; ends of the air flow channel and the first liquid flow channel being communicated with the inner cavity of the wine bottle are defined in the first column; and
a mouth sealing sleeve disposed on an outer periphery of the first column and located between the first column and the wine bottle.

19. The refrigeration apparatus according to claim 18, wherein the air flow channel includes a first air flow sub-channel defined in the first cover body and a second air flow sub-channel defined in the second cover body;
the wine dispensing mechanism further includes:
a switch installation space defined between the first cover body and the second cover body and communicated with the first air flow sub-channel and the second air flow sub-channel; and
a switch disposed in the switch installation space and configured to connect or disconnect the first air flow sub-channel and the second air flow sub-channel.

20. The refrigeration apparatus according to claim 19, wherein the wine dispensing mechanism further includes a connecting rod inserting hole; the connecting rod inserting hole is disposed in the second cover body and disposed opposite to the switch installation space;
the switch installation space has a switch installation opening facing towards a side of the wine dispensing mechanism;
a connecting rod inserting column of one of the two connecting rods is inserted into the switch installation space from the switch installation open end and connected to the switch;
a connecting rod inserting column of another of the two connecting rods is inserted into the connecting rod inserting hole;
in a case where the rocking rod is pressed, the connecting rod rotates and moves towards the fixing member top plate to drive the switch to rotate, so that the switch first air pipe is communicated with the switch second air pipe.
